(19)

Europäisches
Patentamt
European
Patent Office
Office européen
des brevets

(11) **EP 4 336 736 A1**

(12) **EUROPEAN PATENT APPLICATION**
published in accordance with Art. 153(4) EPC

(43) Date of publication:
**13.03.2024 Bulletin 2024/11**

(21) Application number: **22806487.9**

(22) Date of filing: **25.04.2022**

(51) International Patent Classification (IPC):
*H04B 5/02* (2006.01)      *H04L 1/00* (2006.01)

(52) Cooperative Patent Classification (CPC):
**H04B 1/707; H04B 5/48; H04L 1/00; H04L 27/36**

(86) International application number:
**PCT/CN2022/088976**

(87) International publication number:
**WO 2022/237518 (17.11.2022 Gazette 2022/46)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **12.05.2021   CN 202110519334**

(71) Applicant: **Huawei Technologies Co., Ltd.
Longgang
Shenzhen, Guangdong 518129 (CN)**

(72) Inventors:
 • **CHEN, Yan
   Shenzhen, Guangdong 518129 (CN)**

 • **NI, Guanjun
   Shenzhen, Guangdong 518129 (CN)**
 • **ZHU, Yuhong
   Shenzhen, Guangdong 518129 (CN)**
 • **E, Nan
   Shenzhen, Guangdong 518129 (CN)**
 • **ZHANG, Xiaofeng
   Shenzhen, Guangdong 518129 (CN)**
 • **WANG, Liang
   Shenzhen, Guangdong 518129 (CN)**

(74) Representative: **Huawei European IPR
Huawei Technologies Duesseldorf GmbH
Riesstraße 25
80992 München (DE)**

(54) **DATA MODULATION METHOD, DATA PROCESSING METHOD, DEVICE, AND STORAGE MEDIUM**

(57)      Embodiments of this application are applicable to the field of communication technologies, and provide a data modulation method, a data processing method, a device, and a storage medium. The data modulation method is applied to a first electronic device, and the first electronic device performs Bluetooth communication with a second electronic device. The data modulation method includes: determining a bit stream corresponding to a value of an RI field in a to-be-sent Bluetooth data packet, where the Bluetooth data packet further includes a frame body, and the value of the RI field indicates a modulation scheme and a code rate of the frame body; and modulating the bit stream to generate a modulation symbol sequence, where a first bit length corresponding to the modulation symbol sequence is greater than a second bit length of the RI field. In this way, the RI field is modulated, and the obtained modulation symbol sequence has a spread spectrum compared with the RI field, to improve demodulation performance of the RI field after spectrum spreading, thereby improving a transmission success rate of the Bluetooth data packet.

Determine a bit stream corresponding to a value of an RI field in a to-be-sent Bluetooth data packet, where the Bluetooth data packet further includes a frame body, and the value of the RI field indicates a modulation scheme and a code rate of the frame body ⟶ S1201

Modulate the bit stream to generate a modulation symbol sequence ⟶ S1202

FIG. 12

EP 4 336 736 A1

**Description**

This application claims priority to Chinese Patent Application No. 202110519334.X, filed with the China National Intellectual Property Administration on May 12, 2021 and entitled "DATA MODULATION METHOD, DATA PROCESSING METHOD, DEVICE, AND STORAGE MEDIUM", which is incorporated herein by reference in its entirety.

**TECHNICAL FIELD**

This application relates to the field of communication technologies, and in particular, to a data modulation method, a data processing method, a device, and a storage medium.

**BACKGROUND**

Bluetooth is a technical specification for short-range wireless communication. With rapid development of Bluetooth technologies and terminal technologies, more and more electronic devices, especially mobile devices and portable devices, integrate a Bluetooth function. Bluetooth is more and more widely used in various scenarios.

Currently, a Bluetooth connection between devices is maintained based on existing Bluetooth protocols. A maximum transmission bandwidth supported in the existing Bluetooth protocols is 2M. Due to the bandwidth limitation, the existing Bluetooth protocols cannot support an application scenario with relatively high traffic. The Bluetooth standard organization is actively promoting a next generation Bluetooth standard.

The new-generation Bluetooth standard is to define a format of a Bluetooth data packet. How to ensure a transmission success rate of the Bluetooth data packet needs to be urgently resolved.

**SUMMARY**

Embodiments of this application provide a data modulation method, a data processing method, a device, and a storage medium, to improve demodulation performance after spectrum spreading of an RI field, thereby improving a transmission success rate of a Bluetooth data packet.

According to a first aspect, a data modulation method is provided and applied to a first electronic device, where the first electronic device performs Bluetooth communication with a second electronic device. The method includes: determining a bit stream corresponding to a value of an RI field in a to-be-sent Bluetooth data packet, where the Bluetooth data packet further includes a frame body, and the value of the RI field indicates an MCS of the frame body; and modulating the bit stream to generate a modulation symbol sequence, where a first bit length corresponding to the modulation symbol sequence is greater than a second bit length of the RI field.

According to the data modulation method provided in the first aspect, the bit stream of the RI field is modulated to generate the modulation symbol sequence, where the bit length corresponding to the modulation symbol sequence is greater than the bit length of the bit stream of the RI field, so that a quantity of bits increases and there is a spreading gain. In this way, demodulation performance of the RI field after spectrum spreading is improved, and a transmission success rate of the RI field is ensured. After a frame header is correctly parsed, a transmission success rate of the Bluetooth data packet is improved.

In a possible implementation, the modulating the bit stream to generate a modulation symbol sequence includes: performing CCK modulation on the bit stream to generate the modulation symbol sequence, where the modulation symbol sequence includes $2^m$ QPSK symbols, and m is a positive integer.

In this implementation, the CCK modulation is performed on the RI field. The input of the CCK modulation is the bit stream of the RI field, and the output is the modulation symbol sequence including the $2^m$ QPSK symbols. Spectrum spreading and modulation on the RI field are simultaneously completed through the CCK modulation, to improve the demodulation performance of the RI field and ensure correct parsing of the RI field, thereby improving the transmission success rate of the Bluetooth data packet.

In a possible implementation, a ratio of $2^{(m+1)}$ to the second bit length is greater than or equal to 4.

In this implementation, a spreading multiple of the RI field after the spectrum spreading is greater than or equal to 4, and the spreading gain may reach 6 dB or more, to improve the demodulation performance of the RI field, thereby improving the transmission success rate of the Bluetooth data packet.

In a possible implementation, the performing CCK modulation on the bit stream to generate the modulation symbol sequence includes: obtaining, based on preset mapping relationships between the RI field and reference phases, m+1 reference phases corresponding to the bit stream; determining phases of the $2^m$ QPSK symbols based on the m+1 reference phases; and generating the modulation symbol sequence based on the phases of the $2^m$ QPSK symbols.

In a possible implementation, the second bit length is 4 bits, m is equal to 3, and the preset mapping relationships between the RI field and the reference phases are: $[\varphi 1, \varphi 2, \varphi 3, \varphi 4] = [b0 * \pi + b1 * (\pi/2), b2 * \pi + (\pi/2), 0, b3 * \pi]$, where

φ1, φ2, φ3, and φ4 represent four reference phases; and b0, b1, b2, and b3 each represent a value of each bit in the RI field.

In a possible implementation, the second bit length is 4 bits, m is equal to 4, and the preset mapping relationships between the RI field and the reference phases are: $[\varphi1, \varphi2, \varphi3, \varphi4, \varphi5] = [b0 * \pi, b1 * (\pi/2), b2 * \pi + (\pi/2), 0, b3 * \pi]$, where φ1, φ2, φ3, φ4, and φ5 represent five reference phases; and b0, b1, b2, and b3 each represent a value of each bit in the RI field.

In a possible implementation, the determining phases of the 2^m QPSK symbols based on the m+1 reference phases includes: obtaining m+1 code words in a 2^mth-order Walsh code; and determining, based on the m+1 reference phases and the m+1 code words, the phases of the 2^m QPSK symbols.

In this implementation, mapping relationships between the m+1 reference phases and the phases of the 2^m QPSK symbols are determined with reference to a composition rule of the Walsh code, so that iterative decoding can be implemented at a receive end, thereby greatly improving decoding efficiency and speed.

In a possible implementation, the determining, based on the m+1 reference phases and the m+1 code words, the phases of the 2^m QPSK symbols includes: using the m+1 code words as rows of a matrix respectively to form a target matrix; and obtaining, based on the m+1 reference phases and each column vector of the target matrix, the phases of the 2^m QPSK symbols.

In a possible implementation, m is equal to 3, the 2^mth-order Walsh code includes $\{W_0^8, W_1^8, W_2^8, W_3^8, W_4^8, W_5^8, W_6^8, W_7^8\}$, and the m+1 code words include $W_0^8$, $W_1^8$, $W_2^8$, and $W_4^8$.

In this implementation, because distances between $W_0^8$, $W_1^8$, $W_2^8$, and $W_4^8$ are the longest, mapping relationships between the four reference phases and the phases of the eight QPSK symbols are determined with reference to a composition rule of $W_0^8$, $W_1^8$, $W_2^8$, and $W_4^8$, thereby further improving the efficiency and speed of iterative decoding.

In a possible implementation, m is equal to 4, the 2^mth-order Walsh code includes $\{W_0^{16}, W_1^{16}, W_2^{16}, W_3^{16}, W_4^{16}, W_5^{16}, W_6^{16}, W_7^{16}, W_8^{16}, W_9^{16}, W_{10}^{16}, W_{11}^{16}, W_{12}^{16}, W_{13}^{16}, W_{14}^{16}, W_{15}^{16}\}$, and the m+1 code words include $W_0^{16}$, $W_1^{16}$, $W_2^{16}$, $W_4^{16}$, and $W_8^{16}$.

In this implementation, because distances between $W_0^{16}$, $W_1^{16}$, $W_2^{16}$, $W_4^{16}$, and $W_8^{16}$ are the longest, mapping relationships between the five reference phases and the phases of the sixteen QPSK symbols are determined with reference to a composition rule of $W_0^{16}$, $W_1^{16}$, $W_2^{16}$, $W_4^{16}$, and $W_8^{16}$, thereby further improving the efficiency and speed of iterative decoding.

In a possible implementation, the generating the modulation symbol sequence based on the phases of the 2^m QPSK symbols includes: generating the modulation symbol sequence by using a code word expression c, where c = {ej(ψ1), ej(ψ2), ..., ej(ψ2^m)}, or c = {ej(ψ1), ej(ψ2), ..., ej(ψ2^m)}.*{preset symbol sequence}; ψ1, ψ2, ..., and ψ2^m represent the phases of the 2^m QPSK symbols; .* represents multiplication of corresponding positions; and the preset symbol sequence is a sequence including 2^m 1s and -1s.

In this implementation, when the preset symbol sequence is used, further, the phases of the 2^m QPSK symbols may be changed by using the preset symbol sequence. For the 2^m QPSK symbols, a direct-current component of an entire code word is smaller to facilitate demodulation.

In a possible implementation, the modulating the bit stream to generate a modulation symbol sequence includes: performing spectrum spreading on the bit stream by using a preset spreading code, to obtain a spreading sequence; and modulating the spreading sequence by using a preset modulation scheme to generate the modulation symbol sequence.

In this implementation, spectrum spreading is performed first and then modulation is performed on the RI field, and the modulation symbol sequence is obtained after the spectrum spreading and modulation. This improves the demodulation performance of the RI field, and ensures that a receive-side device correctly parses the RI field, thereby improving the transmission success rate of the Bluetooth data packet.

In a possible implementation, the preset modulation scheme is one of the following: DPSK, QPSK, or 8PSK.

In a possible implementation, the preset spreading code is one of the following: a Walsh code, a Golden code, or an M sequence.

In a possible implementation, the second bit length is greater than or equal to 2 bits.

According to a second aspect, a data processing method is provided and applied to a first electronic device, where the first electronic device performs Bluetooth communication with a second electronic device. The method includes: determining that a to-be-sent Bluetooth data packet is used to carry a message LL_PHY_REQ, a message LL_PHY_RSP, or a message LL_PHY_UPDATE_REQ, where the Bluetooth data packet includes an RI field; and setting a value of the RI field to a preset RI field value corresponding to a minimum MCS in a current transmission bandwidth.

According to the data processing method provided in the second aspect, in a scenario in which the first electronic device and the second electronic device perform a bandwidth update procedure, during transmission of the message LL_PHY_REQ, the message LL_PHY_RSP, or the message LL_PHY_UPDATE_REQ, the minimum MCS in the current bandwidth is used for the transmission. In this way, the MCS used for the transmission of the message is reduced to improve demodulation performance, thereby increasing a reception success rate of the message and a success rate of the bandwidth update procedure.

According to a third aspect, an electronic device is provided, including a determining module and a processing module. The determining module is configured to determine a bit stream corresponding to a value of an RI field in a to-be-sent Bluetooth data packet, where the Bluetooth data packet further includes a frame body, and the value of the RI field indicates an MCS of the frame body. The processing module is configured to modulate the bit stream to generate a modulation symbol sequence, where a first bit length corresponding to the modulation symbol sequence is greater than a second bit length of the RI field.

In a possible implementation, the processing module is specifically configured to perform CCK modulation on the bit stream to generate the modulation symbol sequence, where the modulation symbol sequence includes $2^m$ QPSK symbols, and m is a positive integer.

In a possible implementation, a ratio of $2^{(m+1)}$ to the second bit length is greater than or equal to 4.

In a possible implementation, the processing module is specifically configured to: obtain, based on preset mapping relationships between the RI field and reference phases, m+1 reference phases corresponding to the bit stream; determine phases of the $2^m$ QPSK symbols based on the m+1 reference phases; and generate the modulation symbol sequence based on the phases of the $2^m$ QPSK symbols.

In a possible implementation, the second bit length is 4 bits, m is equal to 3, and the preset mapping relationships between the RI field and the reference phases are: $[\varphi1, \varphi2, \varphi3, \varphi4] = [b0 * \pi + b1 * (\pi/2), b2 * \pi + (\pi/2), 0, b3 * \pi]$, where $\varphi1, \varphi2, \varphi3$, and $\varphi4$ represent four reference phases; and b0, b1, b2, and b3 each represent a value of each bit in the RI field.

In a possible implementation, the second bit length is 4 bits, m is equal to 4, and the preset mapping relationships between the RI field and the reference phases are: $[\varphi1, \varphi2, \varphi3, \varphi4, \varphi5] = [b0 * \pi, b1 * (\pi/2), b2 * \pi + (\pi/2), 0, b3 * \pi]$, where $\varphi1, \varphi2, \varphi3, \varphi4$, and $\varphi5$ represent five reference phases; and b0, b1, b2, and b3 each represent a value of each bit in the RI field.

In a possible implementation, the processing module is specifically configured to: obtain m+1 code words in a $2^{m\text{th}}$-order Walsh code; and determine, based on the m+1 reference phases and the m+1 code words, the phases of the $2^m$ QPSK symbols.

In a possible implementation, the processing module is specifically configured to: use the m+1 code words as rows of a matrix respectively to form a target matrix; and obtain, based on the m+1 reference phases and each column vector of the target matrix, the phases of the $2^m$ QPSK symbols.

In a possible implementation, m is equal to 3, the $2^{m\text{th}}$-order Walsh code includes $\{W_0^8, W_1^8, W_2^8, W_3^8, W_4^8, W_5^8, W_6^8, W_7^8\}$, and the m+1 code words include $W_0^8, W_1^8, W_2^8$, and $W_4^8$.

In a possible implementation, m is 4, the $2^{m\text{th}}$-order Walsh code includes $\{W_0^{16}, W_1^{16}, W_2^{16}, W_3^{16}, W_4^{16}, W_5^{16}, W_6^{16}, W_7^{16}, W_8^{16}, W_9^{16}, W_{10}^{16}, W_{11}^{16}, W_{12}^{16}, W_{13}^{16}, W_{14}^{16}, W_{15}^{16}\}$, and the m+1 code words include $W_0^{16}, W_1^{16}, W_2^{16}, W_4^{16}$, and $W_8^{16}$.

In a possible implementation, the processing module is specifically configured to: generate the modulation symbol sequence by using a code word expression c, where c = {ej(ψ1), ej(ψ2), ..., ej(ψ2^m)}, or c = {ej(ψ1), ej(ψ2), ..., ej(ψ2^m)}. *{preset symbol sequence}; ψ1, ψ2, ..., and ψ2^m represent the phases of the $2^m$ QPSK symbols; .* represents multiplication of corresponding positions; and the preset symbol sequence is a sequence including $2^m$ 1s and -1s.

In a possible implementation, the processing module is specifically configured to: perform spectrum spreading on the bit stream by using a preset spreading code, to obtain a spreading sequence; and modulate the spreading sequence by using a preset modulation scheme to generate the modulation symbol sequence.

In a possible implementation, the preset modulation scheme is one of the following: DPSK, QPSK, or 8PSK.

In a possible implementation, the preset spreading code is one of the following: a Walsh code, a Golden code, or an M sequence.

In a possible implementation, the second bit length is greater than or equal to 2 bits.

According to a fourth aspect, an electronic device is provided, including a determining module and a processing module. The determining module is configured to determine that a to-be-sent Bluetooth data packet is used to carry a message LL_PHY_REQ, a message LL_PHY_RSP, or a message LL_PHY_UPDATE_REQ, where the Bluetooth data packet includes an RI field. The processing module is configured to set a value of the RI field to a preset RI field value corresponding to a minimum MCS in a current transmission bandwidth.

According to a fifth aspect, an electronic device is provided. The electronic device includes a processor, and the processor is configured to: be coupled to a memory, read instructions in the memory, and enable, based on the instructions, the electronic device to perform the method according to the first aspect or the second aspect.

According to a sixth aspect, a program is provided. When being executed by a processor, the program performs the method according to the first aspect or the second aspect.

According to a seventh aspect, a computer-readable storage medium is provided, where the computer-readable storage medium stores instructions, and when the instructions are run on a computer or a processor, the method according to the first aspect or the second aspect is implemented.

According to an eighth aspect, a program product is provided, where the program product includes a computer program, the computer program is stored in a readable storage medium, at least one processor of a device may read the computer program from the readable storage medium, and the at least one processor executes the computer program, so that the device implements the method according to the first aspect or the second aspect.

## BRIEF DESCRIPTION OF DRAWINGS

FIG. 1 is a diagram of an application scenario according to an embodiment of this application;
FIG. 2 is a schematic diagram of a format of a Bluetooth data packet according to an embodiment of this application;
FIG. 3 is another schematic diagram of a format of a Bluetooth data packet according to an embodiment of this application;
FIG. 4 is still another schematic diagram of a format of a Bluetooth data packet according to an embodiment of this application;
FIG. 5 is yet another schematic diagram of a format of a Bluetooth data packet according to an embodiment of this application;
FIG. 6A and FIG. 6B are a schematic diagram of a data transmission scenario according to an embodiment of this application;
FIG. 7A and FIG. 7B are another schematic diagram of a data transmission scenario according to an embodiment of this application;
FIG. 8 is a diagram of message exchange between a mobile phone and a wireless headset according to an embodiment of this application;
FIG. 9A and FIG. 9B are still another schematic diagram of a data transmission scenario according to an embodiment of this application;
FIG. 10 is another diagram of message exchange between a mobile phone and a wireless headset according to an embodiment of this application;
FIG. 11 is still another diagram of message exchange between a mobile phone and a wireless headset according to an embodiment of this application;
FIG. 12 is a flowchart of a data modulation method according to an embodiment of this application;
FIG. 13 is a schematic diagram of principles of a data modulation method according to an embodiment of this application;
FIG. 14 is another flowchart of a data modulation method according to an embodiment of this application;
FIG. 15 is another schematic diagram of principles of a data modulation method according to an embodiment of this application;
FIG. 16 is a schematic diagram of a QPSK constellation diagram;
FIG. 17 is a schematic diagram of a structure of an electronic device according to an embodiment of this application; and
FIG. 18 is another schematic diagram of a structure of an electronic device according to an embodiment of this application.

## DESCRIPTION OF EMBODIMENTS

The following describes embodiments of this application with reference to the accompanying drawings.

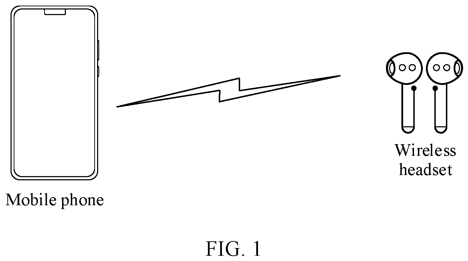

A data modulation method provided in an embodiment of this application is applicable to a scenario in which Bluetooth communication is performed between devices. For example, FIG. 1 is a diagram of an application scenario according to an embodiment of this application. As shown in FIG. 1, the application scenario includes a mobile phone and a wireless headset. After a Bluetooth connection is established between the mobile phone and the wireless headset, the mobile phone and the wireless headset exchange data by using the Bluetooth connection. When the mobile phone sends data to the wireless headset, the mobile phone is a sending device, and the wireless headset is a receiving device. When the wireless headset sends data to the mobile phone, the mobile phone is a receiving device, and the wireless headset is a sending device.

It needs to be noted that, FIG. 1 does not pose a limitation on the application scenario, and does not pose a limitation on names, quantities, and types of the devices in the application scenario. For example, the device may be referred to as a communication device, a terminal device, or an electronic device. Some examples of the device are: a mobile phone, a tablet, a wearable device, a notebook computer, a Bluetooth headset, a Bluetooth speaker, a television, and the like.

For ease of description, in this embodiment of this application, an example is used in which the mobile phone exchanges Bluetooth data with the wireless headset. In some embodiments, the mobile phone is a sending device, and the wireless headset is a receiving device.

First, a frame format of a Bluetooth data packet to which this embodiment of this application is applicable is described.

Bluetooth data packets (also referred to as data frames, Bluetooth data frames, Bluetooth information, or the like) may be transmitted between the mobile phone and the wireless headset. A frame format of a Bluetooth data packet is defined in Bluetooth protocols (also referred to as standards). The frame format usually varies according to different versions of the Bluetooth protocols.

Currently, the Bluetooth protocols include: a basic rate (basic rate, BR) protocol, an enhanced data rate (enhanced date rate, EDR) protocol, and a Bluetooth low energy (Bluetooth low energy, BLE) protocol. The BR or EDR protocol supports a maximum transmission rate of 3 Mbps, and supports a bandwidth of 1 MHz. The BLE protocol supports transmission rates of 1 Mbps, 2 Mbps, 500 Kbps, and 125 Kbps, and supports bandwidths of 1 MHz and 2 MHz. None of the BR protocol, the EDR protocol, and the BLE protocol supports a service such as high-definition audio. Therefore, the Bluetooth standard organization is actively promoting a new-generation Bluetooth standard, which, for example, may be referred to as a high data throughput (high data throughput, HDT) protocol or a BLE HDT protocol, to support an application scenario with relatively high traffic, for example, a scenario in which high-definition audio data is transmitted. The HDT protocol supports 8 Mbps and higher transmission rates, and supports bandwidths including 2 MHz and 4 MHz.

The following describes four frame formats of the HDT protocol by using examples, which, however, do not pose a limitation on the frame formats of the HDT protocol.

1. First frame format

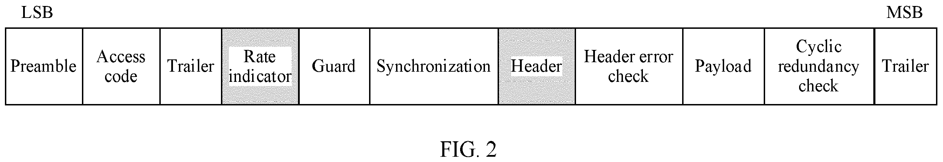

FIG. 2 is a schematic diagram of a format of a Bluetooth data packet according to an embodiment of this application. As shown in FIG. 2, the Bluetooth data packet includes but is not limited to: a preamble (preamble) field, an Access Code (access code) field, a trailer (trailer) field, an RI (rate indicator, rate indicator) field, a Guard (guard interval) field, a sync (synchronization) field, a Header (header) field, an HEC (header error check, header error check) field, a payload (payload) field, and a CRC (cyclic redundancy check) field, and a trailer field.

Fields located before the Header field may be referred to as a frame header (or referred to as control fields), including: the preamble field, the Access Code field, the trailer field, the RI field, the Guard field, and the sync field. The Header field and fields located after the Header field may be referred to as a frame body (or referred to as data fields), including: the Header field, the HEC field, the payload field, the CRC field, and the trailer field. In FIG. 2, a position relationship between fields is indicated by using a least significant bit (least significant bit, LSB) and a most significant bit (most significant bit, MSB).

The following briefly describes some fields.

(1) Trailer field in the frame header

When the frame header uses a differential modulation scheme, for example, when the Access Code field uses differential phase shift keying (differential phase shift keying, DPSK), a trailer field may follow a field that uses the differential modulation scheme.

In differential modulation, information is represented by using a difference between a previous code word and a next code word, for example, a phase difference. Therefore, to ensure correct demodulation of a last bit of information, the trailer field may be used to better help the demodulation.

Optionally, some fields located in the frame header may be encoded, to improve demodulation performance.

Optionally, the Access Code field, the trailer field, and the RI field may be encoded together.

(2) RI field

The RI field indicates a modulation scheme and a code rate (modulation and coding scheme, MCS) of the frame body. A bit length (or referred to as a quantity of bits) of the RI field is not limited in this embodiment of this application. For example, the RI field may be greater than 2 bits. Optionally, the RI field may be 2 bits to 4 bits. When the RI field is 2 bits, the RI field has four values, where decimal values are 0 to 3, and binary sequences are 00, 01, 10, and 11 respectively; and the RI field may represent four MCSs. Similarly, when the RI field is 3 bits, the RI field may represent eight MCSs; or when the RI field is 4 bits, the RI field may represent sixteen MCSs.

Optionally, different bandwidths each may correspond to one group of MCSs. A quantity of MCSs in each bandwidth is not limited in this embodiment of this application. Different bandwidths and different MCSs may correspond to different transmission rates. For example, Table 1 and Table 2 show mapping relationships between the bandwidth, the RI field, the MCS, and the transmission rate in the HDT protocol, but do not constitute a limitation on the mapping relationships.

In Table 1, the RI field is 3 bits, and its decimal value includes 0 to 7, used to indicate eight MCSs. The modulation scheme includes quadrature phase shift keying (quadrature reference phase shift keying, QPSK) and 8-phase shift keying (8 reference phase shift keying, 8PSK). The code rate includes 1/2, 2/3, 3/4, 5/6, 7/12, and 1. When the code rate is 1, it represents that there is no encoding.

For example, in the bandwidth of 2 MHz, the value of the RI field is 0, indicating that the frame body uses the QPSK modulation scheme, the code rate is 1/2, and the corresponding transmission rate is 2 Mbps; and in the bandwidth of 4 MHz, the value of the RI field is 7, indicating that the frame body uses the 8PSK modulation scheme, but there is no encoding, and the corresponding transmission rate is 12 Mbps.

Different MCSs correspond to different transmission rates. An MCS with a minimum transmission rate may be referred to as a minimum MCS, and an MCS with a maximum transmission rate may be referred to as a maximum MCS. Optionally, in a same bandwidth, a smaller value of the RI field indicates a smaller MCS. For example, in the bandwidth of 4 MHz, an MCS corresponding to the value 4 of the RI field is less than MCSs corresponding to the values 5 to 7 of the RI field.

Optionally, when the MCS remains unchanged, the transmission rate may be changed by changing the bandwidth. The higher the bandwidth, the higher the transmission rate. For example, when the MCS is a combination of QPSK and the code rate of 1/2, a transmission rate corresponding to the MCS in the bandwidth of 2 MHz is 2 Mbps, and a transmission rate corresponding to the MCS in the bandwidth of 4 MHz is 4 Mbps.

**Table 1**

| Bandwidth (MHz) | RI field (decimal) | Modulation scheme | Code rate | Transmission rate (Mbps) |
|---|---|---|---|---|
| 2 | 0 | QPSK | 1/2 | 2 |
| | 1 | QPSK | 2/3 | 2.67 |
| | 2 | QPSK | 3/4 | 3 |
| | 3 | 8PSK | 7/12 | 3.5 |
| | 4 | 8PSK | 2/3 | 4 |
| | 5 | 8PSK | 3/4 | 4.5 |
| | 6 | 8PSK | 5/6 | 5 |
| | 7 | 8PSK | 1 | 6 |

(continued)

| Bandwidth (MHz) | RI field (decimal) | Modulation scheme | Code rate | Transmission rate (Mbps) |
|---|---|---|---|---|
| 4 | 0 | QPSK | 1/2 | 4 |
| | 1 | QPSK | 2/3 | 5.33 |
| | 2 | QPSK | 3/4 | 6 |
| | 3 | 8PSK | 7/12 | 7 |
| | 4 | 8PSK | 2/3 | 8 |
| | 5 | 8PSK | 3/4 | 9 |
| | 6 | 8PSK | 5/6 | 10 |
| | 7 | 8PSK | 1 | 12 |

**Table 2**

| Bandwidth (MHz) | RI field (decimal) | Modulation scheme | Code rate | Transmission rate (Mbps) |
|---|---|---|---|---|
| 2 | 0 | QPSK | 1/2 | 2 |
| | 1 | QPSK | 3/4 | 3 |
| | 2 | 8PSK | 2/3 | 4 |
| | 3 | 8PSK | 1 | 6 |
| 4 | 0 | QPSK | 1/2 | 4 |
| | 1 | QPSK | 3/4 | 6 |
| | 2 | 8PSK | 2/3 | 8 |
| | 3 | 8PSK | 1 | 12 |

In Table 2, the RI field is 2 bits, and its decimal value includes 0 to 3, used to indicate four MCSs. The principle is similar to that in Table 1, and details are not described herein again.

It can be understood that, when the bandwidth is the same, a corresponding demodulation threshold is higher as the transmission rate is higher, and correspondingly, the demodulation performance deteriorates. Compared with a case in which no encoding is performed, after an encoding mode is used, the demodulation performance is greatly improved although the transmission rate is impaired. For example, as shown in Table 1, in the bandwidth of 2 MHz, for the QPSK modulation scheme, compared with the case in which no encoding is performed, in an encoding mode with the code rate of 1/2, the transmission rate reduces from 4 Mbps to 2 Mbps, where the rate is cut by half. However, a benefit brought by encoding may enable demodulation performance of the frame body to be improved by about 6 dB. The value of the code rate ranges from 0 to 1. The corresponding demodulation performance is higher as the code rate is smaller. On the contrary, when the code rate is the maximum value 1, no encoding is performed, and corresponding demodulation performance is the worst.

In a process of Bluetooth transmission between devices, the frame body usually carries data and an amount of the data is huge, and the frame header usually carries control information. To ensure a transmission success rate of the Bluetooth data packet, in this embodiment of this application, transmission of the RI field may be performed in a manner of spectrum spreading and/or modulation, so that demodulation performance of the RI field after the spectrum spreading is higher than demodulation performance when the frame body uses a minimum code rate in a plurality of preset code rates. Detailed descriptions are provided subsequently in embodiments.

(3) Guard field

A field before the Guard field and a field after the Guard field usually use different modulation schemes, resulting in different modulation performance. The Guard field separates the fields before and after the Guard field, so that the fields before and after the Guard field can use different modulation schemes.

Optionally, a length of the Guard field is 5 $\mu$s.

(4) Sync field

Located after the Guard field, the sync field provides synchronization information, for example, phase synchronization information, for fields after the Guard field in a modulation process.

Optionally, a length of the sync field is 11 μs.

(5) Header field

The header field carries control information. The Header field and the HEC field may be encoded into one code block by using a Polar code with N being equal to 64 or 128, and a length of the encoded code block is 64 bits or 128 bits.

(6) Payload field

The payload field carries data sent by the mobile phone to the wireless headset. The payload field and the CRC field may be encoded by using M Polar codes each with a code length of N. After the encoding is performed, M code blocks are included, and a length of each code block is N bits. Optionally, a length of the CRC field is 32 bits.

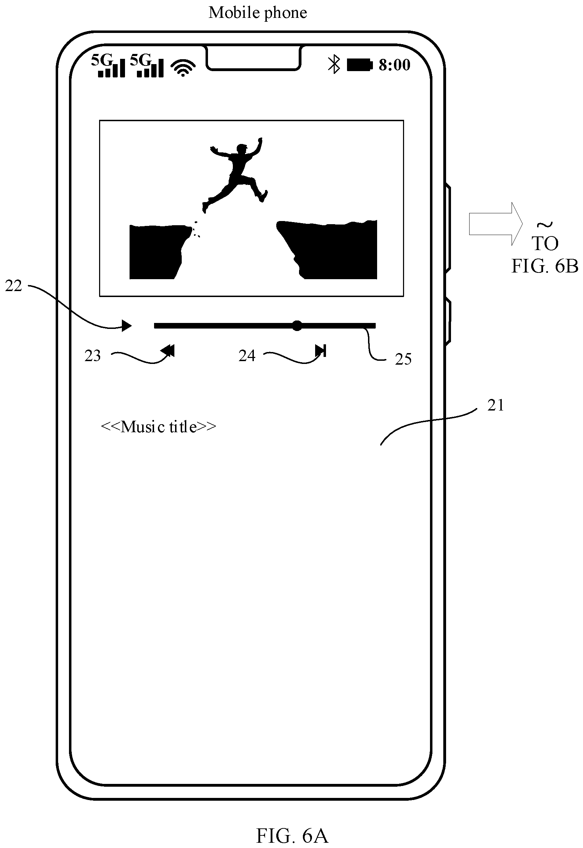

It needs to be noted that, in different data transmission scenarios, content of the data sent by the mobile phone to the wireless headset in the payload field may be different, for example, audio data, high-definition audio data, or control information. FIG. 6A to FIG. 11 are subsequently used as examples for description.

(7) Trailer field in the frame body

The mobile phone modulates and encodes the frame body using the MCS indicated in the RI field, and then sends the data to the wireless headset. Correspondingly, the wireless headset decodes and demodulates received data. To avoid a demodulation error caused by spectrum spreading of a last symbol in a demodulation process, a trailer field may be added to the end of the frame body.

It needs to be noted that, for other descriptions of the foregoing fields, refer to the existing Bluetooth protocols. Specific descriptions are not provided in this application.

It can be learned that, in the frame structure shown in FIG. 2, the frame header has the Guard field and the sync field; and the frame header and the frame body may use different modulation schemes. For example, the frame header uses a Gaussian frequency shift keying (gauss frequency shift keying, GFSK) modulation scheme, and the frame body uses a phase modulation scheme. The frame body is encoded, and the code rate is less than 1.

2. Second frame format

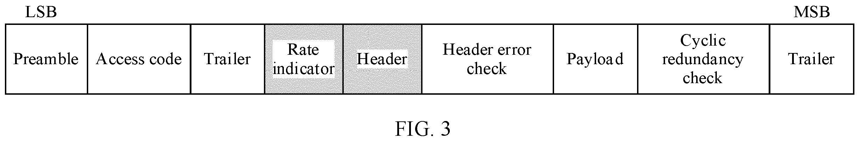

FIG. 3 is another schematic diagram of a format of a Bluetooth data packet according to an embodiment of this application. As shown in FIG. 3, the Bluetooth data packet includes but is not limited to: a preamble field, an Access Code field, a trailer field, an RI field, a Header field, an HEC field, a payload field, a CRC field, and a trailer field.

Fields located before the Header field may be referred to as a frame header, including: the preamble field, the Access Code field, the trailer field, and the RI field. The Header field and fields located after the Header field may be referred to as a frame body, including: the Header field, the HEC field, the payload field, the CRC field, and the trailer field.

A difference between this frame format and the first frame format lies in that, this frame format does not have the Guard field and the sync field, and the frame header and the frame body may use a same modulation scheme, for example, both use a phase modulation scheme.

3. Third frame format

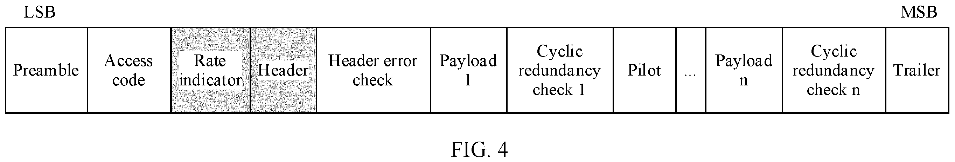

FIG. 4 is still another schematic diagram of a format of a Bluetooth data packet according to an embodiment of this application. As shown in FIG. 4, the Bluetooth data packet includes but is not limited to: a preamble field, an Access Code field, an RI field, a Header field, an HEC field, a payload 1 field to a payload n field, a CRC 1 field to a CRC n field, a pilot (pilot) field, and a trailer field. The payload 1 field to the payload n field are in a one-to-one correspondence with the CRC 1 field to the CRC n field.

Fields located before the Header field may be referred to as a frame header, including: the preamble field, the Access Code field, and the RI field. The Header field and fields located after the Header field may be referred to as a frame body, including: the Header field, the HEC field, the payload 1 field to the payload n field, the CRC 1 field to the CRC n field, the pilot field, and the trailer field.

A difference between this frame format and the first frame format lies in that, this frame format does not have the Guard field and the sync field, and the frame header and the frame body may use a same modulation scheme, for example, both use a phase modulation scheme.

A difference between this frame format and the first frame format or the second frame format further lies in that, the frame header of this frame format does not have the trailer field, and the frame header cannot use a differential modulation scheme, for example, cannot use the DPSK modulation scheme. In addition, segment CRC is used. To be specific, each pair of the payload field and the CRC field may be encoded by using a Polar code, and CRC check may be performed. For example, the payload 1 field and the CRC 1 field are encoded by using a Polar code, and CRC check is performed on them; and a payload 2 field and a CRC 2 field are encoded by using a Polar code, and CRC check is performed on them. Based on segment encoding and segment CRC check, the wireless headset can demodulate and detect data by segment, thereby improving data transmission efficiency and decoding efficiency.

4. Fourth frame format

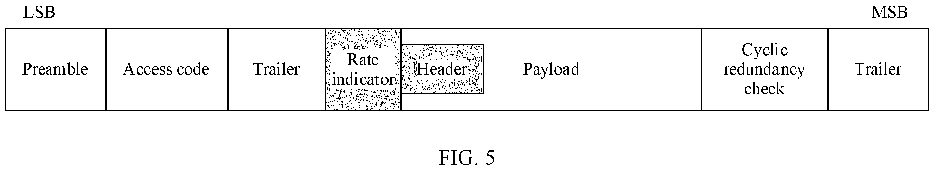

FIG. 5 is yet another schematic diagram of a format of a Bluetooth data packet according to an embodiment of this application. As shown in FIG. 5, the Bluetooth data packet includes but is not limited to: a preamble field, an Access Code field, a trailer field, an RI field, a Header field, a payload field, a CRC field, and a trailer field.

In this implementation, the Header field and the payload field are not encoded, and the code rate is 1. The Header field is not located, as an independent field, before the payload field, but is a part of the payload field.

Fields located before the payload field may be referred to as a frame header, including: the preamble field, the Access Code field, the trailer field, and the RI field. The payload field and fields located after the payload field may be referred to as a frame body, including: the payload field, the CRC field, and the trailer field. The payload field includes the Header field.

The following uses a music scenario as an example to describe a Bluetooth data transmission scenario.

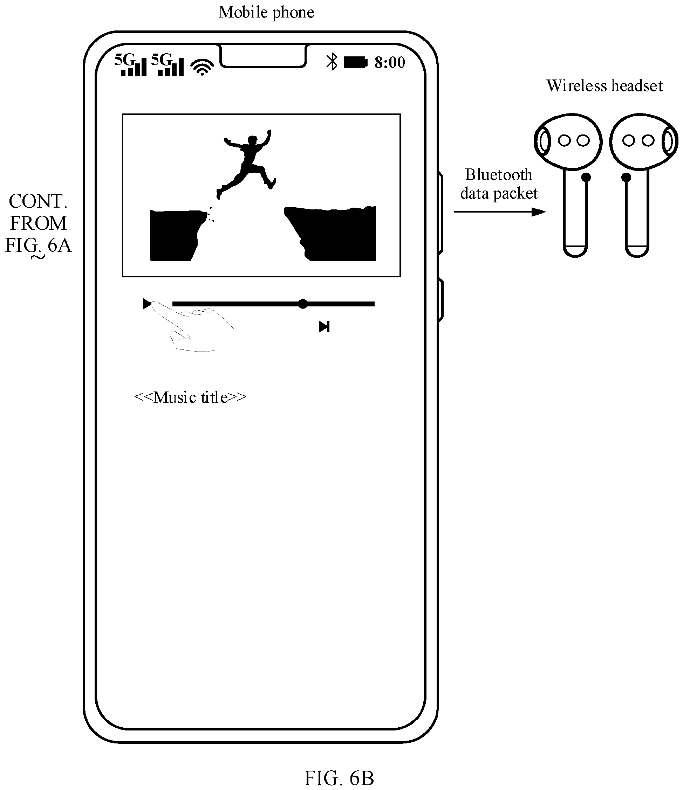

For example, in a scenario, as shown in FIG. 6A and FIG. 6B, after a Bluetooth connection is established between the mobile phone and the wireless headset, the mobile phone displays a music application interface 21 in response to an operation of a user. The operation of the user is not limited in this embodiment. For example, the music application interface 21 includes a music title, a song poster, a play control, and the like. For example, the play control includes a play key 22, a previous-song key 23, a next-song key 24, and a progress bar 25. The user taps the play key 22 to play a song. Correspondingly, the mobile phone generates audio data of the song and a Bluetooth data packet including the audio data in response to the user's operation of tapping the play key 22. For example, in the frame structures shown in FIG. 2 to FIG. 5, the payload field may carry the audio data sent by the mobile phone to the wireless headset. The mobile phone sends the Bluetooth data packet to the wireless headset by using the Bluetooth connection to the wireless headset. After receiving the Bluetooth data packet sent by the mobile phone, the wireless headset parses the Bluetooth data packet to obtain the audio data and plays the song.

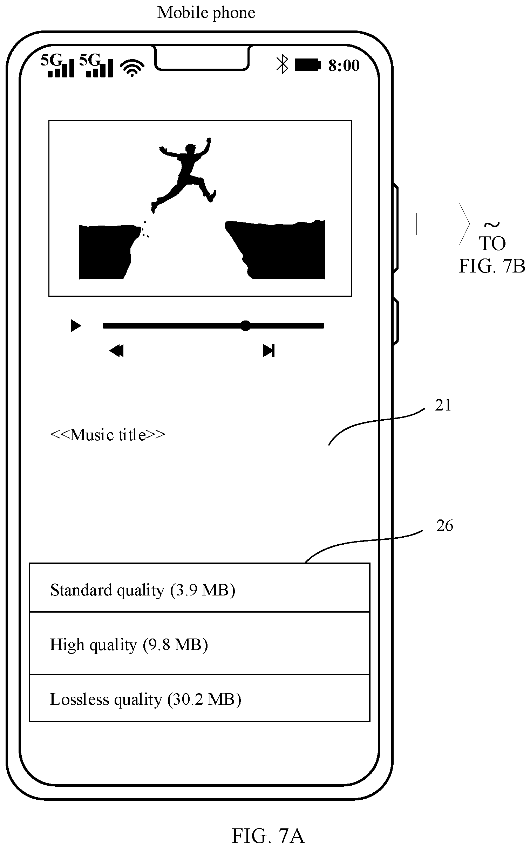

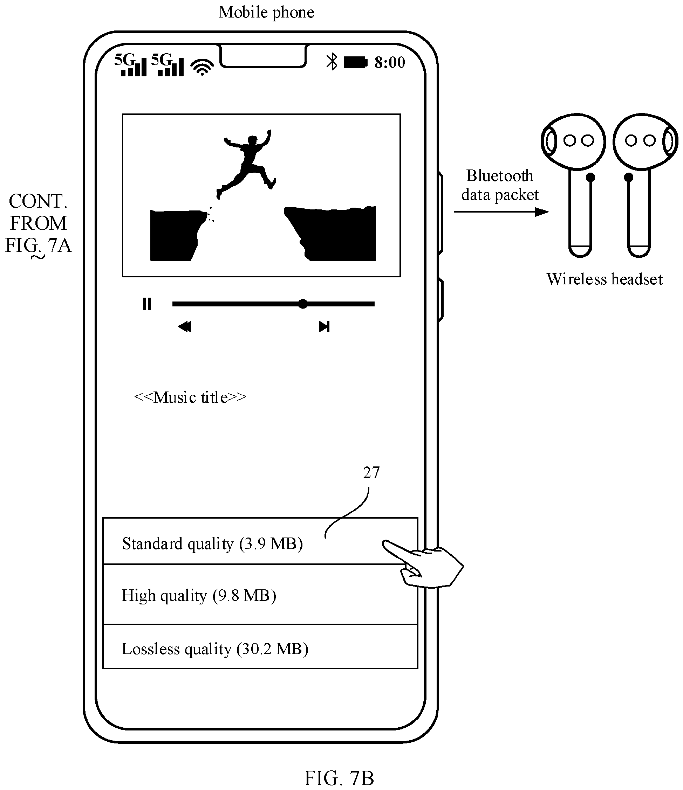

For example, in another scenario, as shown in FIG. 7A and FIG. 7B, a Bluetooth connection has been established between the mobile phone and the wireless headset. The mobile phone currently displays a music application interface 21. In response to an operation of the user, the mobile phone displays a sound quality adjustment option box 26 in the music application interface 21. The operation of the user is not limited in this embodiment. For example, the sound quality adjustment option box 26 includes a plurality of controls, for example, a standard-quality control, a high-quality control, and a lossless-quality control. Different quality (which may also be referred to as sound quality) may be understood as different data amounts of encoded audio files. The higher the quality, the larger the data amount, and the higher the bandwidth required for transmission. Optionally, in ascending order of the required bandwidths, the quality is: standard quality, high quality, and lossless quality in sequence. The user may tap a standard-quality control 27 to play a song of the standard quality. Correspondingly, the mobile phone generates standard-quality audio data and a Bluetooth data packet including the audio data in response to the user's operation of tapping the standard-quality control 27. For example, in the frame structures shown in FIG. 2 to FIG. 5, the payload field may carry the standard-quality audio data sent by the mobile phone to the wireless headset. The mobile phone sends the Bluetooth data packet to the wireless headset by using the Bluetooth connection to the wireless headset. After receiving the Bluetooth data packet sent by the mobile phone, the wireless headset parses the Bluetooth data packet to obtain the standard-quality audio data and plays the song.

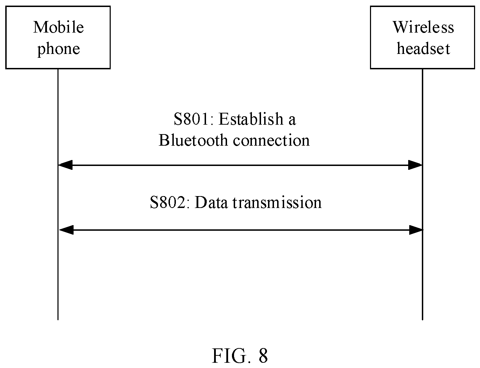

For a message exchange procedure in the foregoing scenario, refer to FIG. 8. FIG. 8 is a diagram of message exchange between a mobile phone and a wireless headset according to an embodiment of this application. As shown in FIG. 8, the procedure specifically includes the following steps.

S801: A Bluetooth connection is established between the mobile phone and the wireless headset.

Information required for establishing a Bluetooth connection may be transmitted between the mobile phone and the wireless headset through a plurality of times of Bluetooth signaling exchange. For example, a Bluetooth encryption key may be negotiated to encrypt Bluetooth data in a data transmission process. For a specific exchange process and specific content, refer to descriptions in the Bluetooth protocols. Specific descriptions are not provided in this embodiment of this application.

S802: The mobile phone performs data transmission with the wireless headset.

The mobile phone and the wireless headset may exchange data based on the established Bluetooth connection. For example, in the scenario shown in FIG. 6A and FIG. 6B or FIG. 7A and FIG. 7B, the mobile phone sends a Bluetooth data packet to the wireless headset, where the Bluetooth data packet includes audio data.

It needs to be noted that, in different application scenarios, data sent by the mobile phone to the wireless headset in the Bluetooth data packet may be different.

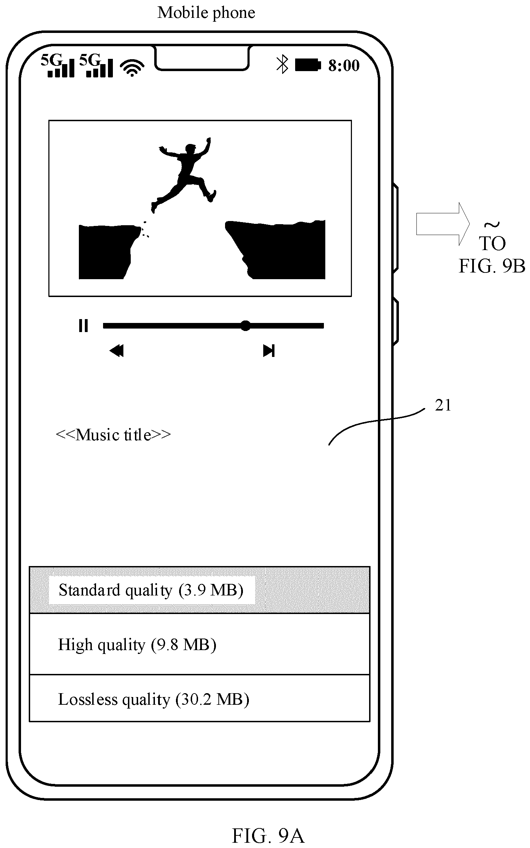

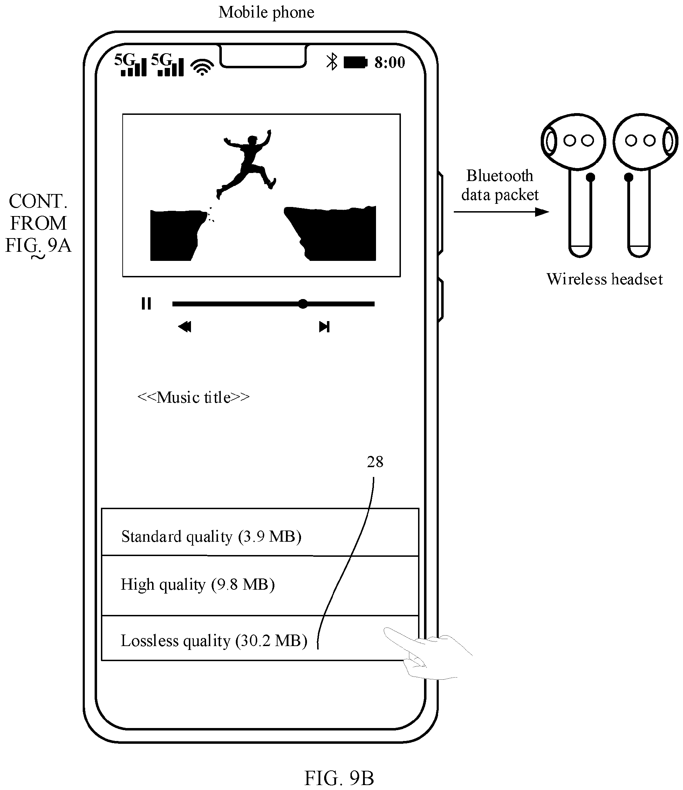

For example, in another scenario, a bandwidth used by the mobile phone and the wireless headset needs to be updated. As shown in FIG. 9A and FIG. 9B, a Bluetooth connection has been established between the mobile phone and the wireless headset. The mobile phone currently displays a music application interface 21, and plays a standard-quality song. A current bandwidth used by the mobile phone and the wireless headset is 2 MHz. The user taps a lossless-quality control 28 to switch to play a song with lossless quality. Encoded data amounts vary according to different song quality. It is assumed that, in a case in which music play duration is the same, a data amount corresponding to standard quality is 3.9 MB, a data amount corresponding to high quality is 9.8 MB, and a data amount corresponding to the lossless quality is 30.2 MB. If the music play duration is one minute, the lossless quality requires that the mobile phone should transmit 30.2 MB audio data to the wireless headset within one minute. To meet the transmission rate requirement, the mobile phone needs to switch the current bandwidth of 2 MHz to a larger bandwidth, for example, a bandwidth of 4 MHz, so as to improve a data transmission requirement on the bandwidth and the rate. Therefore, before sending the lossless-quality audio data to the wireless headset, the mobile phone needs to perform bandwidth update negotiation with the wireless headset. After the bandwidth update negotiation is completed, the bandwidth is switched from 2 MHz to 4 MHz, and the mobile phone sends the lossless-quality audio data to the wireless headset by using the bandwidth of 4 MHz.

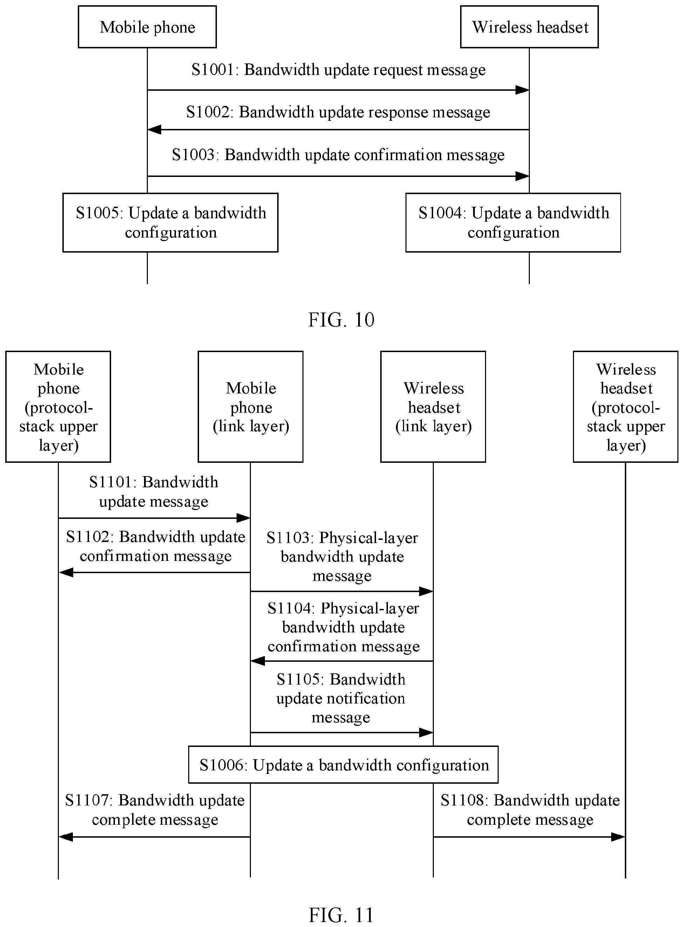

In this scenario, with reference to FIG. 10, S802 in FIG. 8 may specifically include the following steps.

S1001: The mobile phone sends a bandwidth update request message to the wireless headset.

For example, in response to the user's operation of tapping the lossless-quality control 28, the mobile phone sends the bandwidth update request message to the wireless headset, to indicate to update the current bandwidth (for example, 2 MHz) to 4 MHz.

For example, with reference to the frame structures shown in FIG. 2 to FIG. 5, a Header field in the bandwidth update request message sent by the mobile phone may include signaling indication information, indicating that the message is a control message; and a payload field may include bandwidth switching indication information, to indicate to switch a bandwidth, for example, to indicate to switch the current bandwidth of 2 MHz to 4 MHz.

S1002: The wireless headset sends a bandwidth update response message to the mobile phone.

For example, after receiving the bandwidth update request message sent by the mobile phone, the wireless headset sends the bandwidth update response message to the mobile phone, to indicate that the wireless headset may perform an update based on a bandwidth indicated by the wireless headset.

S1003: The mobile phone sends a bandwidth update confirmation message to the wireless headset.

For example, after receiving the bandwidth update response message sent by the wireless headset, the mobile phone may send the bandwidth update confirmation message to the wireless headset, to indicate a specific moment of bandwidth switching, so that the wireless headset can receive, at a specified moment by using a specified bandwidth, a Bluetooth data packet sent by the mobile phone.

S1004: The wireless headset updates a bandwidth configuration.

For example, the wireless headset updates the bandwidth configuration, so as to receive, at the specified moment by using the specified bandwidth (for example, a bandwidth of 4 MHz), the Bluetooth data packet sent by the mobile phone.

S1005: The mobile phone updates a bandwidth configuration.

For example, the mobile phone updates the bandwidth configuration, so as to send the Bluetooth data packet to the wireless headset at the specified moment by using the specified bandwidth (for example, the bandwidth of 4 MHz).

An execution sequence of S1004 and S1005 is not limited in this embodiment.

Then, the mobile phone may send the Bluetooth data packet to the wireless headset, where the Bluetooth data packet includes the lossless-quality audio data.

It needs to be noted that FIG. 10 shows a procedure of upper-layer signaling exchange between the mobile phone and the wireless headset. The bandwidth update procedure is usually initiated by an upper layer of a protocol stack in a device. FIG. 11 is still another diagram of message exchange between a mobile phone and a wireless headset according to an embodiment of this application, and shows message exchange between an upper layer of a protocol stack in the mobile phone and a lower layer of the protocol stack in the mobile phone and the wireless headset. The lower layer of the protocol stack may include a link layer (linker layer, LL) and a physical layer (physical layer, PHY). As shown in FIG. 11, the procedure may include the following steps.

S1101: The upper layer of the mobile phone sends a bandwidth update message (HDT Set PHY) to the lower layer of the mobile phone, to indicate to update a bandwidth, for example, to update the bandwidth from 2 MHz to 4 MHz.

S1102: The lower layer of the mobile phone sends a bandwidth update confirmation message (Command Status) to the upper layer of the mobile phone, to indicate to execute a bandwidth update procedure.

S1103: The lower layer of the mobile phone sends a physical-layer bandwidth update message (LL_PHY_REQ) to the lower layer of the wireless headset, to indicate to update the bandwidth, for example, to update the bandwidth from 2 MHz to 4 MHz.

S1104: The lower layer of the wireless headset sends a physical-layer bandwidth update confirmation message (LL_PHY_REQ) to the lower layer of the mobile phone, to indicate that the wireless headset may perform an update based on a bandwidth indicated by the wireless headset.

S1105: The lower layer of the mobile phone sends a bandwidth update notification message (LL_PHY_UPDATE_REQ) to the lower layer of the wireless headset, to indicate a specific moment of bandwidth switching.

S1106: The lower layer of the mobile phone and the lower layer of the wireless headset each update a bandwidth configuration at the physical layer.

S1107: The lower layer of the mobile phone sends a bandwidth update complete message (PHY Update Complete) to the upper layer of the mobile phone, to indicate that the bandwidth update is completed.

S1108: The lower layer of the wireless headset sends a PHY Update Complete message to the upper layer of the wireless headset, to indicate that the bandwidth update is completed.

An execution sequence of S1107 and S1108 is not limited in this embodiment.

In a process of physical layer exchange between the mobile phone and the wireless headset, for example, for the wireless headset, each time the wireless headset receives a message (or signaling) sent by the mobile phone, the wireless headset performs corresponding processing such as decapsulation and check on the message, and returns ACK (Acknowledgment, acknowledgment) information or NACK (Negative Acknowledgment, negative acknowledgment) information to the mobile phone by using the specified bandwidth (that is, the bandwidth after the update, for example, 4 MHz), to indicate whether the wireless headset has correctly received the message.

In this embodiment of this application, to ensure that the transmission of the messages LL_PHY_REQ, LL_PHY_RSP, and LL PHY UPDATE REQ in S1103 to S1105 is reliable and ensure that a receive-side device can successfully receive the messages, an MCS that is less than a current MCS of the frame body may be used for the transmission. In this way, the MCS of the message is reduced to improve demodulation performance, thereby increasing a reception success rate of the message and a success rate of the bandwidth update procedure.

For example, it is assumed that the current bandwidth is 2 MHz and is expected to be updated to 4 MHz, and the current MCS corresponds to 4 Mbps. In this case, the messages LL_PHYREQ, LL_PHYRSP, and LL PHY UPDATE REQ may be transmitted by using an MCS lower than 4 Mbps. If the RI field is 2 bits, refer to Table 2. The MCSs lower than 4 Mbps in the bandwidth of 2 MHz include the MCS of 3 Mbps (the value of the RI field is 1) and the MCS of 2 Mbps (the value of the RI field is 0). Therefore, when the foregoing three messages are transmitted by using an MCS lower than 4 Mbps, the value of the RI field may be 0 or 1. In other words, values of RI fields in Bluetooth data packets of the messages LL_PHY_REQ, LL_PHY_RSP, and LL_PHY_UPDATE_REQ are 0 or 1, which corresponds to binary 00 or 01.

Optionally, to improve transmission stability and cope with a scenario in which the MCS changes frequently during communication, statistics may be collected on an average MCS of the frame body in a preset time interval, and the transmission of the messages LL_PHY_REQ, LL_PHY_RSP, and LL_PHY_UPDATE_REQ in S1103 to S1105 may be performed by using an MCS that is less than the average MCS of the frame body. A value of the preset time interval is not limited in this embodiment.

Optionally, to further ensure desirable reliability of the transmission of the messages LL_PHY_REQ, LL PHY RSP, and LL PHY UPDATE REQ in S1103 to S1105, a minimum MCS or an MCS corresponding to a minimum transmission rate in the current bandwidth may be used for the transmission.

For example, it is assumed that, the RI field is 3 bits, the current bandwidth is 4 MHz and is expected to be updated to 2 MHz, and the transmission rate corresponding to the current MCS is 10 Mbps. Refer to Table 1. The transmission rate corresponding to the minimum MCS in the bandwidth of 4 MHz is 4 Mbps, and the value of the RI field is 0. In this case, the minimum MCS within the 4 MHz bandwidth is used for the transmission of the messages, that is, the values of the RI fields in the Bluetooth data packets of the messages LL_PHY_REQ, LL_PHY_RSP, and LL_PHY_UPDATE_REQ are 0, which corresponds to binary 000.

This embodiment of this application provides a data modulation method, which may be applied to the HDT protocol. Spectrum spreading and/or modulation are performed on the RI field, so that the demodulation performance of the RI field after the spectrum spreading is higher than the demodulation performance when the frame body uses the minimum code rate in the plurality of preset code rates, to ensure that the RI field is correctly demodulated at a receive end, thereby improving the transmission success rate of the Bluetooth data packet.

It needs to be noted that, in the data modulation method provided in this embodiment of this application, by performing spectrum spreading and/or modulation on the RI field, a ratio (which may be referred to as a spreading multiple for short) of a bit length of a modulation symbol sequence that is generated after the modulation to the bit length of the RI field may be greater than or equal to a preset threshold, to ensure that the RI field is correctly demodulated at the receive end, thereby improving the transmission success rate of the Bluetooth data packet. A value of the preset threshold is not limited in this embodiment of this application. For example, the preset threshold is 4.

The data modulation method provided in this embodiment of this application may also be applied to another field of the frame header in the Bluetooth data packet. This is not limited herein.

Specific embodiments are used below to describe technical solutions of this application in detail. The following embodiments may be combined with each other, and details about a same or similar concept or process are probably not described again in some embodiments.

Embodiments of this application may be combined with each other, and details about a same or similar concept or process are probably not described again in some embodiments. In embodiments of this application, terms "first", "second", "third", "fourth", and the like (if any) are intended to distinguish between similar objects but do not necessarily describe a specific order or sequence.

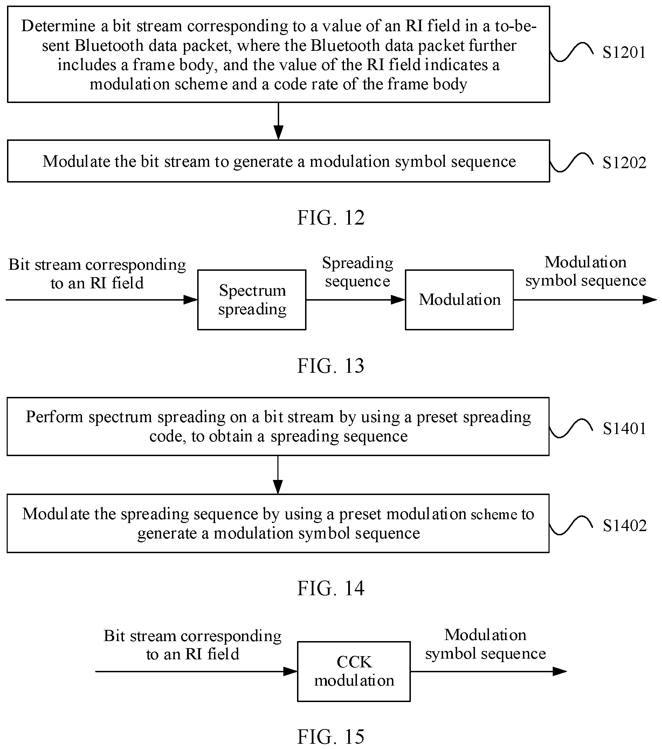

FIG. 12 is a flowchart of a data modulation method according to an embodiment of this application. This embodiment may be executed by a first electronic device, for example, a mobile phone. The first electronic device may perform Bluetooth communication with a second electronic device, and the second electronic device is, for example, a wireless headset. As shown in FIG. 12, the data modulation method provided in this embodiment may include the following steps.

S1201: Determine a bit stream corresponding to a value of an RI field in a to-be-sent Bluetooth data packet, where the Bluetooth data packet further includes a frame body, and the value of the RI field indicates an MCS of the frame body.

For a frame structure, the RI field, the frame body, and the MCS of the Bluetooth data packet, refer to FIG. 2 to FIG. 5 and Table 1. Details are not described herein again.

Specifically, the MCS of the frame body may be determined for the to-be-sent Bluetooth data packet by using a conventional technology, and then the value of the RI field is determined based on mapping relationships between the RI field and MCSs, for example, Table 1 and Table 2. A bit length of the RI field or a quantity of bits of the RI field may be referred to as a second bit length. A bit stream corresponding to the value of the RI field is the second bit length. For example, it is assumed that the value of the RI field is 2 in decimal notation. If the RI field is 2 bits, the bit stream is 10. If the RI field is 3 bits, the bit stream is 010. If the RI field is 4 bits, the bit stream is 0010.

S1202: Modulate the bit stream to generate a modulation symbol sequence, where a first bit length corresponding to the modulation symbol sequence is greater than the second bit length of the RI field.

Optionally, demodulation performance of the modulation symbol sequence is higher than target demodulation performance (or referred to as a coding gain corresponding to a lowest MCS of the frame body) when the frame body uses a minimum code rate in a plurality of preset code rates.

The modulation symbol sequence may include a plurality of modulation symbols, and types of the modulation symbols and corresponding bit lengths are related to a used modulation scheme. For example, when the modulation scheme is QPSK, the modulation symbols are QPSK symbols, and a bit length corresponding to each QPSK symbol is 2 bits. It is assumed that the bit stream is n bits, the modulation symbol sequence generated by using QPSK modulation includes n/2 QPSK symbols, and the bit length (referred to as the first bit length) corresponding to the modulation symbol sequence is: (n/2) * 2 = n bits. For another example, when the modulation scheme is 8PSK, the modulation symbols are 8PSK symbols, and a bit length corresponding to each 8PSK symbol is 3 bits. After 8PSK modulation is performed on the n-bit bit stream, n/3 8PSK symbols may be generated, and the first bit length is: (n/3) * 3 = n bits. When the first bit length is equal to the second bit length, it can be understood that a spreading gain is 0, that is, there is no spreading gain.

In this embodiment, the bit stream is modulated to generate the modulation symbol sequence, the bit length corresponding to the modulation symbol sequence is greater than the bit length of the bit stream, the quantity of bits increases, and there is a spreading gain. In addition, the demodulation performance of the modulation symbol sequence after spectrum spreading is higher than the target demodulation performance when the frame body uses the minimum code rate in the plurality of preset code rates. Generally, the corresponding demodulation performance is higher as the code rate is smaller. In other words, the demodulation performance of the RI field after the spectrum spreading is higher than maximum demodulation performance of the frame body, thereby ensuring a transmission success rate of the RI field. After a frame header is correctly parsed, a transmission success rate of the frame body is improved, and a transmission success rate of a Bluetooth data packet in a new-generation Bluetooth standard is improved.

Optionally, the bit length corresponding to the modulation symbol sequence, or in other words, a quantity of modulation symbols in the modulation symbol sequence, may be determined in advance based on the target demodulation performance.

Specifically, the minimum code rate in the plurality of preset code rates is a preset value. In this way, a target coding gain can be obtained. In addition, a demodulation performance difference between a modulation scheme of the RI field and a modulation scheme of the frame body may be obtained through theoretical deduction or simulation. In this way, a spreading gain required for enabling the demodulation performance of the RI field to be higher than the demodulation performance of the frame body may be obtained, and finally, a required spreading multiple is computed based on the spreading gain.

A relationship between the spreading multiple and the spreading gain is as follows:

Gain = 10 * log10(M), where M is the spreading multiple, and Gain is the spreading gain.

For example, it is assumed that the RI field is 3 bits. As shown in Table 1, the minimum code rate is 1/2, and the target coding gain is about 6 dB. It is further assumed that the RI field and the frame body use a same modulation scheme, and then the spreading multiple of the RI field needs to be extended by at least four times, to achieve the spreading gain of about 6 dB.

Optionally, in an example, if the RI field is 2 bits, a quantity of bits corresponding to the modulation symbol sequence is at least 8 bits. It is assumed that the modulation symbols are QPSK symbols, and then a quantity of QPSK symbols is at least 4, for example, may be 8.

Optionally, in another example, if the RI field is 3 bits, a quantity of bits corresponding to the modulation symbol sequence is at least 12 bits. It is assumed that the modulation symbols are QPSK symbols, and then a quantity of QPSK symbols is at least 6, for example, may be 8.

Optionally, in still another example, if the RI field is 3 bits, a quantity of bits corresponding to the modulation symbol sequence is at least 12 bits. It is assumed that the modulation symbols are 8PSK symbols, and then a quantity of 8PSK symbols is at least 4.

Optionally, in yet another example, if the RI field is 4 bits, a quantity of bits corresponding to the modulation symbol sequence is at least 16 bits. It is assumed that the modulation symbols are QPSK symbols, and then a quantity of QPSK symbols is at least 8, for example, may be 16.

Based on the embodiment shown in FIG. 12, FIG. 13 is a schematic diagram of principles of a data modulation method according to an embodiment of this application and FIG. 14 is another flowchart of a data modulation method according to an embodiment of this application. In this embodiment, spectrum spreading is combined with a modulation scheme, and the RI field obtains a spreading gain through the spectrum spreading. As shown in FIG. 13 and FIG. 14, in S1202, the modulating the bit stream to generate a modulation symbol sequence may include the following steps.

S1401: Perform spectrum spreading on the bit stream by using a preset spreading code, to obtain a spreading sequence.

A bit length of the preset spreading code is determined based on the foregoing solution. For details about the foregoing solution, refer to related descriptions of the spreading multiple and the spreading gain in the embodiment shown in FIG. 12.

S1402: Modulate the spreading sequence by using a preset modulation scheme to generate the modulation symbol sequence.

In this embodiment, a spreading algorithm is first used, to perform the spectrum spreading on the RI field to obtain the spreading sequence. The spreading sequence has a specific spreading gain, and a value of the gain is related to the spreading multiple or the bit length of the spreading code. The spreading multiple or the bit length of the spreading code may be determined based on the foregoing solution. For example, the RI field is 2 bits, and the spreading multiple is 8. After the spectrum spreading, the spreading sequence is 16 bits, and the spreading gain may reach 9 dB. For another example, the RI field is 2 bits, the spreading multiple is 4, the spreading sequence after the spectrum spreading is 8 bits, and the spreading gain may reach 6 dB. For still another example, the RI field is 4 bits, the spreading multiple is 4, the spreading sequence after the spectrum spreading is 16 bits, and the spreading gain may reach 6 dB. Then, the spreading sequence is modulated to generate the modulation symbol sequence.

It can be learned that, in the data modulation method provided in this embodiment, spectrum spreading is performed first on the RI field and then modulation is performed on the RI field. Because the bit length of the spreading code is determined based on the foregoing solution, the demodulation performance of the modulation symbol sequence that is obtained after the spectrum spreading and modulation may be higher than the demodulation performance when the frame body uses the minimum code rate in the plurality of preset code rates, to ensure that the receive-side device correctly parses the RI field, thereby improving the transmission success rate of the Bluetooth data packet.

The following describes a relationship between the target demodulation performance and the spreading multiple or the bit length of the spreading code.

Specifically, the spreading multiple or the bit length of the spreading code may indicate the spreading gain, and the spreading multiple or the bit length of the spreading code may be determined based on the target demodulation performance.

Examples are used below for description.

It is assumed that the required spreading gain of the RI field in the foregoing solution is less than 6 dB. In this case, to enable the demodulation performance of the modulation symbol sequence to be higher than the target demodulation performance when the frame body uses the minimum code rate in the plurality of preset code rates, the spreading multiple may be greater than or equal to 4 and the bit length of the spreading code may be greater than or equal to 4 bits. For example, the spreading multiple is 4, and the bit length of the spreading code is 4 bits.

It is assumed that the required spreading gain of the RI field in the foregoing solution is 6 dB, and then the spreading multiple needs to be greater than 4, and the bit length of the spreading code is greater than 4 bits. For example, the spreading multiple may be 8, and the bit length of the spreading code may be 8 bits.

An implementation of the preset spreading code is not limited in this embodiment. Optionally, the preset spreading code is one of the following: a Walsh code, a Golden code, or an M sequence.

Optionally, the preset modulation scheme is one of the following: DPSK, QPSK, or 8PSK.

The following uses the Walsh code as an example to describe an implementation of the spectrum spreading.

The WALSH code is a synchronous orthogonal code, and each code word has a good autocorrelation characteristic and a zero-everywhere cross-correlation characteristic, thereby contributing to accuracy and efficiency of decoding.

Code words of the Walsh code may be generated by using a Hadamard (Hadamard) matrix. The Hadamard matrix is represented as follows:

$$W_{i+1} = \begin{bmatrix} W_i & W_i \\ W_i & -W_i \end{bmatrix}$$

It can be learned that a higher-order Walsh code can be generated by placing an entire group of W into the first three matrix positions and then placing an inverted group into the lower right matrix position.

The following describes a process of generating a sixteenth-order Walsh code.

A first-order Walsh code may be represented as: $W_0^1 = +1$,

where the superscript of W represents an order of the Walsh code, the subscript of W represents a position of the Walsh code in all Walsh codes of that order, and a value of the subscript starts from 0.

$$W_2 = \begin{bmatrix} W_1 & W_1 \\ W_1 & -W_1 \end{bmatrix} = \begin{bmatrix} +1 & +1 \\ +1 & -1 \end{bmatrix}$$

where the second-order Walsh code includes:

$$W_0^2 = \begin{bmatrix} +1 & +1 \end{bmatrix}$$

$$W_1^2 = \begin{bmatrix} +1 & -1 \end{bmatrix}$$

$$W_4 = \begin{bmatrix} W_2 & W_2 \\ W_2 & -W_2 \end{bmatrix}$$

where the fourth-order Walsh code includes:

$$W_0^4 = \begin{bmatrix} +1 & +1 & +1 & +1 \end{bmatrix}$$

$$W_1^4 = \begin{bmatrix} +1 & -1 & +1 & -1 \end{bmatrix}$$

$$W_2^4 = \begin{bmatrix} +1 & +1 & -1 & -1 \end{bmatrix}$$

$$W_0^4 = \begin{bmatrix} +1 & +1 & +1 & +1 \end{bmatrix}$$

$$W_8 = \begin{bmatrix} W_4 & W_4 \\ W_4 & -W_4 \end{bmatrix}$$

where the eighth-order Walsh code includes:

$$W_0^8 = \begin{bmatrix} +1 & +1 & +1 & +1 & +1 & +1 & +1 & +1 \end{bmatrix}$$

$$W_1^8 = \begin{bmatrix} +1 & -1 & +1 & -1 & +1 & -1 & +1 & -1 \end{bmatrix}$$

$$W_2^8 = \begin{bmatrix} +1 & +1 & -1 & -1 & +1 & +1 & -1 & -1 \end{bmatrix}$$

$$W_3^8 = \begin{bmatrix} +1 & -1 & -1 & +1 & +1 & -1 & -1 & +1 \end{bmatrix}$$

$$W_4^8 = \begin{bmatrix} +1 & +1 & +1 & +1 & -1 & -1 & -1 & -1 \end{bmatrix}$$

$$W_5^8 = \begin{bmatrix} +1 & -1 & +1 & -1 & -1 & +1 & -1 & +1 \end{bmatrix}$$

$$W_6^8 = \begin{bmatrix} +1 & +1 & -1 & -1 & -1 & -1 & +1 & +1 \end{bmatrix}$$

$$W_7^8 = \begin{bmatrix} +1 & -1 & -1 & +1 & -1 & +1 & +1 & -1 \end{bmatrix}$$

$$W_{16} = \begin{bmatrix} W_8 & W_8 \\ W_8 & -W_8 \end{bmatrix}$$

where composition principles of the sixteenth-order Walsh code are similar. The sixteenth-order Walsh code is not presented herein.

It is assumed that the RI field is 4 bits, and the bit stream is represented as: RI = [b0, b1, b2, b3], where b0, b1, b2, and b3 are respectively the four bits of the RI field.

It is assumed that the spreading multiple is 4, and the length of the spreading sequence after the spectrum spreading is: 4 * 4 = 16 bits. The preset spreading code is a Walsh code, and is specifically $W_1^4 = \begin{bmatrix} +1 & -1 & +1 & -1 \end{bmatrix}$ in the fourth-order Walsh code.

Spectrum spreading on the RI field and $W_1^4$ is to perform an exclusive OR operation on each bit of the RI field and $W_1^4$ respectively to form a new bit sequence. The spreading sequence after the spectrum spreading is: $[b0 \oplus W_1^4, b1 \oplus W_1^4, b2 \oplus W_1^4, b3 \oplus W_1^4]$, where $\oplus$ indicates bitwise exclusive OR.

For example, RI = [0, 0, 1, 1], that is, b0 = 0, b1 = 0, b2 = 1, and b3 = 1. Then:

$$b0 \oplus W_1^4 = [0 \oplus 1, 0 \oplus -1, 0 \oplus 1, 0 \oplus -1] = [1, 1, 1, 1]$$

$$b1 \oplus W_1^4 = [0 \oplus 1, 0 \oplus -1, 0 \oplus 1, 0 \oplus -1] = [1, 1, 1, 1]$$

$$b2 \oplus W_1^4 = [1 \oplus 1, 1 \oplus -1, 1 \oplus 1, 1 \oplus -1] = [0, 1, 0, 1]$$

$$b3 \oplus W_1^4 = [1 \oplus 1, 1 \oplus -1, 1 \oplus 1, 1 \oplus -1] = [0, 1, 0, 1]$$

where the spreading sequence is: 1, 1, 1, 1, 1, 1, 1, 1, 0, 1, 0, 1, 0, 1, 0, 1.

Based on the embodiment shown in FIG. 12, another embodiment of this application provides an implementation of a data modulation method. Specifically, the RI field is modulated by using a complementary code keying (complementary code keying, CCK) modulation scheme, so that the RI field obtains a spreading gain. FIG. 15 is another schematic diagram of principles of a data modulation method according to an embodiment of this application. As shown in FIG. 15, in S1202, the modulating the bit stream to generate a modulation symbol sequence may include:
performing complementary code keying CCK modulation on the bit stream to generate the modulation symbol sequence, where the modulation symbol sequence includes $2^m$ quadrature phase shift keying QPSK symbols, and m is a positive integer determined by the required spreading gain in the foregoing solution. For details about the foregoing solution, refer to related descriptions of the spreading multiple and the spreading gain in the embodiment shown in FIG. 12.

First, the CCK modulation is briefly described.

CCK is a modulation and encoding technology that combines spectrum spreading and modulation, where spectrum spreading, encoding, and modulation are designed as a whole. Compared with the manner of spectrum spreading first and then modulation shown in FIG. 13 or FIG. 14, CCK can complete spectrum spreading and modulation in one step, thereby improving processing efficiency and overall system performance.

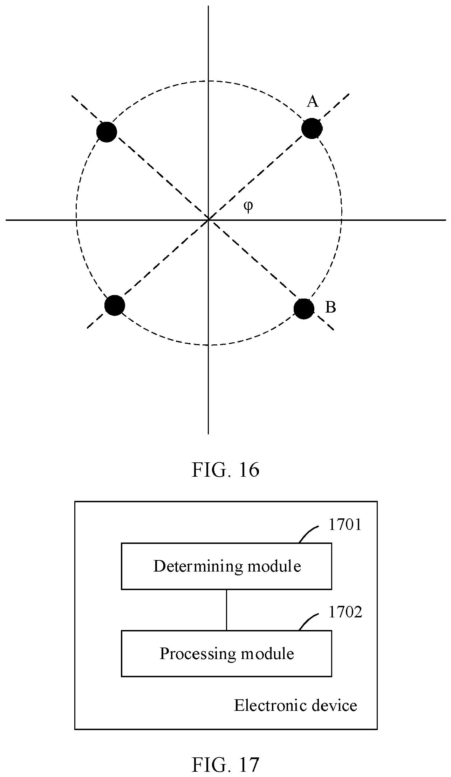

An input of the CCK modulation is a binary sequence with a length of n bits, to output a group of modulation symbols. An example in which the modulation symbols are QPSK symbols is used for description. A QPSK symbol is a point on a QPSK constellation diagram. For example, FIG. 16 is a schematic diagram of a QPSK constellation diagram. As shown in FIG. 16, the constellation diagram shows four points, namely, four QPSK symbols. For a QPSK symbol corresponding to a point A, a phase is $\varphi$. The QPSK symbol corresponding to the point A may be represented as: $e^{\wedge}(j\varphi)$, ej(cp), or $e^{j(\phi)}$, where e represents a natural exponent. The QPSK symbol corresponding to the point A may be alternatively represented as a complex number whose phase is $\varphi$ in a unit circle, that is, coscp + j * sincp. The CCK modulation may be generally understood as: how to map the input n-bit binary sequence to the group of QPSK symbols on the constellation diagram. Different quantities and phases of the QPSK symbols directly affect CCK modulation performance.

In this embodiment, the CCK modulation is performed on the RI field. The input of the CCK modulation is the bit stream of the RI field, and the output is the modulation symbol sequence including the $2^m$ QPSK symbols, where m is determined based on the required spreading gain in the foregoing solution. A value of m is determined in advance and properly, and both spectrum spreading and modulation are performed on the RI field through the CCK modulation, so that the demodulation performance of the RI field is higher than the demodulation performance when the frame body uses the minimum code rate in the plurality of preset code rates, to ensure correct parsing of the RI field, thereby improving the transmission success rate of the Bluetooth data packet.

The following describes, by using examples, how to determine m based on the required spreading gain in the foregoing solution and the bit length of the RI field.

Specifically, each QPSK symbol corresponds to 2 bits, and the modulation symbol sequence includes $2^m$ QPSK symbols, that is, the length of the modulation symbol sequence is $2^{(m+1)}$ bits.

When m = 1, there are two QPSK symbols, and the modulation symbol sequence is 4 bits.

When m = 2, there are four QPSK symbols, and the modulation symbol sequence is 8 bits.

When m = 3, there are eight QPSK symbols, and the modulation symbol sequence is 16 bits.

When m = 4, there are 16 QPSK symbols, and the modulation symbol sequence is 32 bits.

It is assumed that the required spreading gain of the RI field in the foregoing solution is 6 dB.

Optionally, the RI field is 2 bits. To enable the spreading gain of the RI field to be greater than or equal to 6 dB, the modulation symbol sequence needs to be greater than or equal to 8 bits, and m may be greater than or equal to 2. For example, the value of m is 3. In this case, the modulation symbol sequence is 16 bits. There are $2^{16}$ implementations in total for the modulation symbol sequence with the length of 16 bits. The RI field is 2 bits, and there are $2^2$ implementations in total. The CCK modulation may be understood as: determining a group of $2^2$ implementations in the $2^{16}$ implementations.

Optionally, the RI field is 3 bits. To enable the spreading gain of the RI field to be greater than or equal to 6 dB, the modulation symbol sequence needs to be greater than or equal to 12 bits, and m may be greater than or equal to 3. For example, the value of m is 3.

Optionally, the RI field is 4 bits. To enable the spreading gain of the RI field to be greater than or equal to 6 dB, the modulation symbol sequence needs to be greater than or equal to 16 bits, and m may be greater than or equal to 3. For example, the value of m is 3. For another example, the value of m is 4.

Optionally, to ensure the spreading gain of the RI field, in this embodiment, m is greater than or equal to 3, or a ratio of the bit length of the modulation symbol sequence to the bit length of the RI field is greater than 4.

The following describes in detail a process of performing the CCK modulation on the RI field by using the CCK modulation scheme.

Optionally, the performing CCK modulation on the bit stream to generate the modulation symbol sequence may include:

obtaining, based on preset mapping relationships between the RI field and reference phases, m+1 reference phases corresponding to the bit stream;
determining phases of the 2^m QPSK symbols based on the m+1 reference phases; and
generating the modulation symbol sequence based on the phases of the 2^m QPSK symbols.

Specifically, the m+1 reference phases are first obtained based on the bit stream corresponding to the value of the RI field. The m+1 reference phases determine the phases of the 2^m QPSK symbols. Whether the selected reference phases are proper affects the phases of the 2^m QPSK symbols. It can be understood that, coherence between code words is better as Euclidean distances between the 2^m QPSK symbols are longer, and then the demodulation performance is higher.

There are preset mapping relationships between the RI field and the reference phases. The mapping relationships are not limited in this embodiment, for example, may be determined through simulation in actual application.

Examples are used below for description.

The mapping relationships between the RI field and the reference phases may be represented as: $\varphi = f(RI)$, where $RI = [b0, b1, ..., bn-1]$ and represents the RI field having the length of n bits; $\varphi = [\varphi1, \varphi2, ..., \varphi m+1]$ and represents the m+1 reference phases; and f() may be referred to as a CCK phase generation function.

Optionally, in an example, the RI field is 4 bits, m = 3, $RI = [b0, b1, b2, b3]$, and $\varphi = [\varphi1, \varphi2, \varphi3, \varphi4]$; and f() may be: $[\varphi1, \varphi2, \varphi4] = [b0 * \pi + b1 * (\pi/2), b2 * \pi + (\pi/2), 0, b3*\pi]$.

Optionally, in another example, the RI field is 4 bits, m = 4, $RI = [b0, b1, b2, b3]$, and $\varphi = [\varphi1, \varphi2, \varphi3, \varphi4, \varphi5]$; and f() may be: $[\varphi1, \varphi2, \varphi3, \varphi4, \varphi5] = [b0 * \pi, b1 * (\pi/2), b2 * \pi + (\pi/2), 0, b3 * \pi]$.

Optionally, in still another example, the RI field is 3 bits, m = 3, $RI = [b0, b1, b2]$, and $\varphi = [\varphi1, \varphi2, \varphi3, \varphi4]$; and f() may be: $[\varphi1, \varphi2, \varphi3, \varphi4] = [b0 * \pi, b1 * \pi + (\pi/2), 0, b2 * \pi]$.

Optionally, in yet another example, the RI field is 2 bits, m = 3, $RI = [b0, b1]$, and $\varphi = [\varphi1, \varphi2, \varphi3, \varphi4]$; and f() may be: $[\varphi1, \varphi2, \varphi3, \varphi4] = [b0 * \pi + b1 * (\pi/2), b1 * \pi + (\pi/2), 0, b0 * \pi]$.

In the process of performing the CCK modulation on the RI field, after the m+1 reference phases are determined, the phases of the 2^m QPSK symbols may be determined based on the m+1 reference phases. It can be understood that, any reference phase may appear in a phase of a QPSK symbol, or may not appear in any phase of the QPSK symbols. That the reference phase appears in a phase of a QPSK symbol may be considered as that the reference phase has performed phase rotation on the QPSK symbol. For example, as shown in FIG. 16, a phase of a QPSK symbol corresponding to a point A is $\varphi$, and the QPSK symbol corresponding to the point A is represented as ej(cp). A phase of a QPSK symbol corresponding to a point B is $\varphi + 3 * \pi/2$, and the QPSK symbol corresponding to the point B is represented as ej(cp + 3 * π/2). The point B may be understood as rotating the point A by $3 * \pi/2$ anticlockwise, where $3 * \pi/2$ may be understood as a reference phase. Properly determining the phases of the 2^m QPSK symbols based on the m+1 reference phases can improve decoding efficiency.

In this embodiment, to improve the decoding speed and efficiency, mapping relationships between the m+1 reference phases and the phases of the 2^m QPSK symbols may be determined with reference to a composition rule of the Walsh code. Because the code words of the Walsh code have good autocorrelation and coherence, determining the mapping relationships between the m+1 reference phases and the phases of 2^m QPSK symbols with reference to the Walsh code can implement iterative decoding at the receive end, thereby greatly improving the decoding efficiency and speed.

Optionally, the determining phases of the 2^m QPSK symbols based on the m+1 reference phases may include:

obtaining m+1 code words in a 2^m<sup>th</sup>-order Walsh code; and
determining, based on the m+1 reference phases and the m+1 code words, the phases of the 2^m QPSK symbols.

Examples are used below for description.

It is assumed that m = 3, and then there are four reference phases. Four code words may be selected from an eighth-order Walsh code, and mapping relationships between the four reference phases and phases of eight QPSK symbols are determined based on a composition rule of the four selected code words. The four selected code words are not limited in this embodiment.

It is assumed that eight code words of the eighth-order Walsh code are represented as $W_0^8$, $W_1^8$, $W_2^8$, $W_3^8$, $W_4^8$, $W_5^8$, $W_6^8$, and $W_7^8$. Refer to the embodiment shown in FIG. 14. Details are not described herein again.

Optionally, in an implementation, the four code words may include $W_0^8$, $W_1^8$, $W_2^8$, and $W_4^8$. In this implementation, distances between $W_0^8$, $W_1^8$, $W_2^8$, and $W_4^8$ are the longest, thereby further improving the efficiency and speed of iterative decoding.

Optionally, in another implementation, the four code words may include $W_0^8$, $W_1^8$, $W_2^8$, and $W_5^8$.

It is assumed that m = 4, and then there are five reference phases. Five code words may be selected from a sixteenth-order Walsh code, and mapping relationships between the five reference phases and phases of sixteen QPSK symbols are determined based on a composition rule of the five selected code words. The five selected code words are not limited in this embodiment.

For a composition process of the sixteenth-order Walsh code, refer to the example shown in FIG. 14. Details are not described herein again. The sixteenth-order Walsh code includes $W_0^{16}$, $W_1^{16}$, $W_2^{16}$, $W_3^{16}$, $W_4^{16}$, $W_5^{16}$, $W_6^{16}$, $W_7^{16}$, $W_8^{16}$, $W_9^{16}$, $W_{10}^{16}$, $W_{11}^{16}$, $W_{12}^{16}$, $W_{13}^{16}$, $W_{14}^{16}$, and $W_{15}^{16}$.

Optionally, in an implementation, the five code words may include $W_0^{16}$, $W_1^{16}$, $W_2^{16}$, $W_4^{16}$, and $W_8^{16}$. In this implementation, distances between $W_0^{16}$, $W_1^{16}$, $W_2^{16}$, $W_4^{16}$, and $W_8^{16}$ are the longest, thereby further improving the efficiency and speed of iterative decoding.

Optionally, in another implementation, the five code words may include $W_0^{16}$, $W_1^{16}$, $W_4^{16}$, $W_8^{16}$, and $W_{15}^{16}$.

Optionally, the determining, based on the m+1 reference phases and the m+1 code words, the phases of the 2^m QPSK symbols may include:

> using the m+1 code words as rows of a matrix respectively to form a target matrix; and
> obtaining, based on the m+1 reference phases and each column vector of the target matrix, the phases of the 2^m QPSK symbols.

Specifically, the Walsh code includes 1s and -1s, where 1 indicates that a reference phase is summated, and -1 indicates that a reference phase is not summated.

An example is used below for description.

It is assumed that m = 3. The four reference phases are represented as [φ1, φ2, φ3, φ4], and the four code words are $W_0^8$, $W_1^8$, $W_2^8$, and $W_4^8$.

A target matrix formed by using the four code words as rows of the matrix is as follows:

$$
\begin{bmatrix}
+1 & +1 & +1 & +1 & +1 & +1 & +1 & +1 \\
+1 & -1 & +1 & -1 & +1 & -1 & +1 & -1 \\
+1 & +1 & -1 & -1 & +1 & +1 & -1 & -1 \\
+1 & +1 & +1 & +1 & -1 & -1 & -1 & -1
\end{bmatrix}
$$

To clearly describe the meaning of whether a reference phase is summated, a description may be made by replacing -1s in the target matrix with 0s and using a matrix multiplication operation.

The target matrix after the replacement is as follows:

$$\begin{bmatrix} 1 & 1 & 1 & 1 & 1 & 1 & 1 & 1 \\ 1 & 0 & 1 & 0 & 1 & 0 & 1 & 0 \\ 1 & 1 & 0 & 0 & 1 & 1 & 0 & 0 \\ 1 & 1 & 1 & 1 & 0 & 0 & 0 & 0 \end{bmatrix}$$

The phases of the 2^m QPSK symbols are as follows:

$$[\varphi1, \varphi2, \varphi3, \varphi4] \begin{bmatrix} 1 & 1 & 1 & 1 & 1 & 1 & 1 & 1 \\ 1 & 0 & 1 & 0 & 1 & 0 & 1 & 0 \\ 1 & 1 & 0 & 0 & 1 & 1 & 0 & 0 \\ 1 & 1 & 1 & 1 & 0 & 0 & 0 & 0 \end{bmatrix}$$

$$= [\varphi1 + \varphi2 + \varphi3 + \varphi4, \varphi1 + \varphi3 + \varphi4, \varphi1 + \varphi2 + \varphi4, \varphi1 + \varphi4, \varphi1 + \varphi2 + \varphi3, \varphi1 + \varphi3,$$

$$\varphi1 + \varphi2, \varphi1]$$

Vectors in the 2nd column of the target matrix are used as an example. The vectors in the 2nd column of the target matrix include elements 1, -1, 1, and 1. The 2nd element is -1, indicating that a corresponding reference vector $\varphi2$ is not summated. Therefore, a phase of a 2nd QPSK symbol is: $\varphi1 + \varphi3 + \varphi4$.

It is assumed that m = 4. The five reference phases are represented as $[\varphi1, \varphi2, \varphi3, \varphi4, \varphi5]$, and the five code words are $W_0^{16}$, $W_1^{16}$, $W_2^{16}$, $W_4^{16}$, and $W_8^{16}$.

The phases of the 2^m QPSK symbols are as follows:

$$[\varphi1, \varphi2, \varphi3, \varphi4] \begin{bmatrix} W_0^{16} \\ W_1^{16} \\ W_2^{16} \\ W_4^{16} \\ W_8^{16} \end{bmatrix}$$

$$= [\varphi1 + \varphi2 + \varphi3 + \varphi4 + \varphi5, \varphi1 + \varphi3 + \varphi4 + \varphi5, \varphi1 + \varphi2 + \varphi4 + \varphi5, \varphi1 + \varphi4 + \varphi5, \varphi1$$

$$+ \varphi2 + \varphi3 + \varphi5, \varphi1 + \varphi3 + \varphi5, \varphi1 + \varphi2 + \varphi5, \varphi1 + \varphi5, \varphi1 + \varphi2 + \varphi3 + \varphi4, \varphi1 + \varphi3 + \varphi4, \varphi1 + \varphi2$$

$$+ \varphi4, \varphi1 + \varphi4, \varphi1 + \varphi2 + \varphi3, \varphi1 + \varphi3, \varphi1 + \varphi2, \varphi1]$$

In the process of performing the CCK modulation on the RI field, after the phases of the 2^m QPSK symbols are determined, the modulation symbol sequence may be generated based on the phases of the 2^m QPSK symbols.

Optionally, in an implementation, the modulation symbol sequence may be generated by using a code word expression: c = {ej($\psi$1), ej($\psi$2), ..., ej($\psi$2^m)}, where $\psi$1, $\psi$2, ..., and $\psi$2^m represent the phases of the 2^m QPSK symbols.

Examples are used below for description.

In an example, m = 3, and it is assumed that:

$$[\psi1, \psi2, ..., \psi8] = [\varphi1 + \varphi2 + \varphi3 + \varphi4, \varphi1 + \varphi3 + \varphi4, \varphi1 + \varphi2 + \varphi4, \varphi1 + \varphi4, \varphi1 + \varphi2$$

$$+ \varphi3, \varphi1 + \varphi3, \varphi1 + \varphi2, \varphi1]$$

In this case, the modulation symbol sequence may be:

{ej(φ1 + φ2 + φ3 + φ4), ej(φ1 + φ3 + φ4), ej(φ1 + φ2 + φ4), ej(φ1 + φ4), ej(φ1 + φ2 + φ3), ej(φ1 + φ3), ej(φ1 + φ2), ej(φ1)}

In another example, m = 4, and it is assumed that:

[ψ1, ψ2, …, ψ16] = [φ1 + φ2 + φ3 + φ4 + φ5, φ1 + φ3 + φ4 + φ5, φ1 + φ2 + φ4 + φ5, φ1 + φ4 + φ5, φ1 + φ2 + φ3 + φ5, φ1 + φ3 + φ5, φ1 + φ2 + φ5, φ1 + φ5, φ1 + φ2 + φ3 + φ4, φ1 + φ3 + φ4, φ1 + φ2 + φ4, φ1 + φ4, φ1 + φ2 + φ3, φ1 + φ3, φ1 + φ2, φ1]

In this case, the modulation symbol sequence may be:

c = {ej(φ1 + φ2 + φ3 + φ4 + φ5), ej(φ1 + φ3 + φ4 + φ5), ej(φ1 + φ2 + φ4 + φ5), ej(φ1 + φ4 + φ5), ej(φ1 + φ2 + φ3 + φ5), ej(φ1 + φ3 + φ5), ej(φ1 + φ2 + φ5), ej(φ1 + φ5), ej(φ1 + φ2 + φ3 + φ4), ej(φ1 + φ3 + φ4), ej(φ1 + φ2 + φ4), ej(φ1 + φ4), ej(φ1 + φ2 + φ3), ej(φ1 + φ3), ej(φ1 + φ2), ej(φ1)}

Optionally, in another implementation, the modulation symbol sequence may be generated by using a code word expression c:

c = {ej(ψ1), ej(ψ2), …, ej(ψ2^m)}.*{preset symbol sequence}

where ψ1, ψ2, ..., and ψ2^m represent the phases of the 2^m QPSK symbols; .* represents multiplication of corresponding positions; and the preset symbol sequence is a sequence including 2^m 1s and -1s.
In this implementation, the phases of the 2^m QPSK symbols may be further changed by using the preset symbol sequence. For the 2^m QPSK symbols, a direct-current component of an entire codeword is smaller to facilitate demodulation.
For example, it is assumed that:

[ψ1, ψ2, …, ψ2^m] = [φ1 + φ2 + φ3 + φ4, φ1 + φ3 + φ4, φ1 + φ2 + φ4, φ1 + φ4, φ1 + φ2 + φ3, φ1 + φ3, φ1 + φ2, φ1],

and
the preset symbol sequence is [1, 1, 1, 1, -1, -1, -1, -1].
In this case, the modulation symbol sequence may be:

{ej(φ1 + φ2 + φ3 + φ4), ej(φ1 + φ3 + φ4), ej(φ1 + φ2 + φ4), ej(φ1 + φ4), −ej(φ1 + φ2 + φ3), −ej(φ1 + φ3), −ej(φ1 + φ2), −ej(φ1)}

The following describes, by using specific examples, a process of modulating the RI field by using the CCK modulation scheme.
It is assumed that the RI field is 4 bits and represented as RI = [b0, b1, b2, b3], eight QPSK symbols are output, and m = 3.
Example 1

f(RI) = [φ1, φ2, φ3, φ4] = [b0 * π + b1 * (π/2), b2 * π + (π/2), 0, b3 * π]

$$c = \{ej(\varphi 1 + \varphi 2 + \varphi 3 + \varphi 4), ej(\varphi 1 + \varphi 3 + \varphi 4), ej(\varphi 1 + \varphi 2 + \varphi 4), ej(\varphi 1 + \varphi 4), ej(\varphi 1 + \varphi 2 + \varphi 3), ej(\varphi 1 + \varphi 3), ej(\varphi 1 + \varphi 2), ej(\varphi 1)\}$$

It is assumed that RI = [1, 1, 1, 1]. Then:

$$[\varphi 1, \varphi 2, \varphi 3, \varphi 4] = [1 * \pi + 1 * (\pi/2), 1 * \pi + (\pi/2), 0, 1 * \pi] = [3 * \pi/2, 3 * \pi/2, 0, \pi]$$

$$c = \{ej(\varphi 1 + \varphi 2 + \varphi 3 + \varphi 4), ej(\varphi 1 + \varphi 3 + \varphi 4), ej(\varphi 1 + \varphi 2 + \varphi 4), ej(\varphi 1 + \varphi 4), ej(\varphi 1 + \varphi 2 + \varphi 3), ej(\varphi 1 + \varphi 3), ej(\varphi 1 + \varphi 2), ej(\varphi 1)\}$$

$$= \{ej(8 * \pi/2), ej(5 * \pi/2), ej(8 * \pi/2), ej(5 * \pi/2), ej(6 * \pi/2), ej(3 * \pi/2), ej(6 * \pi/2), ej(3 * \pi/2)\}$$

$$= \{ej(0), ej(\pi/2), ej(0), ej(\pi/2), ej(\pi), ej(3 * \pi/2), ej(\pi), ej(3 * \pi/2)\}$$

Example 2

$$f(RI) = [\varphi 1, \varphi 2, \varphi 3, \varphi 4] = [b0 * \pi + b1 * (\pi/2), b2 * \pi, 0, b3 * \pi]$$

$$c = \{ej(\varphi 1 + \varphi 2 + \varphi 3 + \varphi 4), ej(\varphi 1 + \varphi 3 + \varphi 4), ej(\varphi 1 + \varphi 2 + \varphi 4), ej(\varphi 1 + \varphi 4), ej(\varphi 1 + \varphi 2 + \varphi 3), ej(\varphi 1 + \varphi 3), ej(\varphi 1 + \varphi 2), ej(\varphi 1)\}$$

It is assumed that RI = [1, 1, 1, 1]. Then:

$$[\varphi 1, \varphi 2, \varphi 3, \varphi 4] = [1 * \pi + 1 * (\pi/2), 1 * \pi, 0, 1 * \pi] = [3 * \pi/2, \pi, 0, \pi]$$

$$c = \{ej(\varphi 1 + \varphi 2 + \varphi 3 + \varphi 4), ej(\varphi 1 + \varphi 3 + \varphi 4), ej(\varphi 1 + \varphi 2 + \varphi 4), ej(\varphi 1 + \varphi 4), ej(\varphi 1 + \varphi 2 + \varphi 3), ej(\varphi 1 + \varphi 3), ej(\varphi 1 + \varphi 2), ej(\varphi 1)\}$$

$$= \{ej(7 * \pi/2), ej(5 * \pi/2), ej(7 * \pi/2), ej(5 * \pi/2), ej(5 * \pi/2), ej(3 * \pi/2), ej(5 * \pi/2), ej(3 * \pi/2)\}$$

$$= \{ej(3 * \pi/2), ej(\pi/2), ej(3 * \pi/2), ej(\pi/2), ej(\pi/2), ej(3 * \pi/2), ej(\pi/2), ej(3 * \pi/2)\}$$

Example 3

$$(RI) = [\varphi 1, \varphi 2, \varphi 3, \varphi 4] = [b0 * \pi + b1 * (\pi/2), b2 * \pi, 0, b3 * \pi]$$

$$c = \{ej(\varphi 1 + \varphi 2 + \varphi 3 + \varphi 4), ej(\varphi 1 + \varphi 3 + \varphi 4), ej(\varphi 1 + \varphi 2 + \varphi 4), ej(\varphi 1 + \varphi 4), ej(\varphi 1 + \varphi 2 + \varphi 3), ej(\varphi 1 + \varphi 3), ej(\varphi 1 + \varphi 2), ej(\varphi 1)\}. * \{\text{preset symbol sequence}\}$$

where the preset symbol sequence = [1, 1, 1, -1, 1, 1, -1, 1]

It is assumed that RI = [1, 0, 1, 0]. Then:

$$[\varphi 1, \varphi 2, \varphi 3, \varphi 4] = [1 * \pi + 0 * \pi/2, 1 * \pi, 0, 0 * \pi] = [\pi, \pi, 0, 0]$$

$$c = \{ej(\varphi 1 + \varphi 2 + \varphi 3 + \varphi 4), ej(\varphi 1 + \varphi 3 + \varphi 4), ej(\varphi 1 + \varphi 2 + \varphi 4), ej(\varphi 1 + \varphi 4), ej(\varphi 1 + \varphi 2 + \varphi 3), ej(\varphi 1 + \varphi 3), ej(\varphi 1 + \varphi 2), ej(\varphi 1)\}.*\{preset\ symbol\ sequence\}$$

$$= \{ej(2\pi), ej(\pi), ej(2\pi), ej(\pi), ej(2\pi), ej(\pi), ej(2\pi), ej(\pi)\}.*\{1, 1, 1, -1, 1, 1, -1, 1\}$$

$$= \{ej(0), ej(\pi), ej(0), -ej(\pi), ej(0), ej(\pi), -ej(0), ej(\pi)\}$$

It can be understood that, to implement the foregoing functions, the electronic device includes corresponding hardware and/or software modules for performing the functions. In combination with example algorithm steps described in embodiments disclosed in this specification, this application may be implemented by hardware or a combination of hardware and computer software. Whether a function is performed by hardware or hardware driven by computer software depends on particular application and design constraints of the technical solutions. Persons skilled in the art may use different methods to implement the described functions for each particular application with reference to embodiments, but it should not be considered that the implementation goes beyond the scope of this application.

In embodiments of this application, the electronic device may be divided into functional modules based on the foregoing method examples. For example, each functional module corresponding to each function may be obtained through division, or two or more functions may be integrated into one module. It needs to be noted that, in embodiments of this application, division into the modules is an example and is merely logical function division, and there may be another division manner in actual implementation. It needs to be noted that, a name of a module in embodiments of this application is an example, and the name of the module is not limited in actual implementation.

FIG. 17 is a schematic diagram of a structure of an electronic device according to an embodiment of this application. As shown in FIG. 17, the electronic device provided in this embodiment may include a determining module 1701 and a processing module 1702.

In an implementation, the determining module 1701 is configured to determine a bit stream corresponding to a value of an RI field in a to-be-sent Bluetooth data packet, where the Bluetooth data packet further includes a frame body, and the value of the RI field indicates an MCS of the frame body; and

the processing module 1702 is configured to modulate the bit stream to generate a modulation symbol sequence, where a first bit length corresponding to the modulation symbol sequence is greater than a second bit length of the RI field.

Optionally, the processing module 1702 is specifically configured to:

perform CCK modulation on the bit stream to generate the modulation symbol sequence, where the modulation symbol sequence includes $2^m$ QPSK symbols, and m is a positive integer.

Optionally, a ratio of $2^{(m+1)}$ to the second bit length is greater than or equal to 4.

Optionally, the processing module 1702 is specifically configured to:

obtain, based on preset mapping relationships between the RI field and reference phases, m+1 reference phases corresponding to the bit stream;
determine phases of the $2^m$ QPSK symbols based on the m+1 reference phases; and
generate the modulation symbol sequence based on the phases of the $2^m$ QPSK symbols.

Optionally, the second bit length is 4 bits, m is equal to 3, and the preset mapping relationships between the RI field and the reference phases are:

$$[\varphi 1, \varphi 2, \varphi 3, \varphi 4] = [b0 * \pi + b1 * (\pi/2), b2 * \pi + (\pi/2), 0, b3 * \pi]$$

where $\varphi 1$, $\varphi 2$, $\varphi 3$, and $\varphi 4$ represent four reference phases; and b0, b1, b2, and b3 each represent a value of each bit in the RI field.

Optionally, the second bit length is 4 bits, m is equal to 4, and the preset mapping relationships between the RI field and the reference phases are:

$$[\varphi 1, \varphi 2, \varphi 3, \varphi 4, \varphi 5] = [b0 * \pi, b1 * (\pi/2), b2 * \pi + (\pi/2), 0, b3 * \pi]$$

where $\varphi 1$, $\varphi 2$, $\varphi 3$, $\varphi 4$, and $\varphi 5$ represent five reference phases; and b0, b1, b2, and b3 each represent a value of each bit in the RI field.

Optionally, the processing module 1702 is specifically configured to:

obtain m+1 code words in a 2^m^th-order Walsh code; and
determine, based on the m+1 reference phases and the m+1 code words, the phases of the 2^m QPSK symbols.

Optionally, the processing module 1702 is specifically configured to:

use the m+1 code words as rows of a matrix respectively to form a target matrix; and
obtain, based on the m+1 reference phases and each column vector of the target matrix, the phases of the 2^m QPSK symbols.

Optionally, m is equal to 3, the 2^m^th-order Walsh code includes $\{W_0^8, W_1^8, W_2^8, W_3^8, W_4^8, W_5^8, W_6^8, W_7^8\}$, and the m+1 code words include $W_0^8, W_1^8, W_2^8$, and $W_4^8$.

Optionally, m is 4, the 2^m^th-order Walsh code includes $\{W_0^{16}, W_1^{16}, W_2^{16}, W_3^{16}, W_4^{16}, W_5^{16}, W_6^{16}, W_7^{16}, W_8^{16}, W_9^{16}, W_{10}^{16}, W_{11}^{16}, W_{12}^{16}, W_{13}^{16}, W_{14}^{16}, W_{15}^{16}\}$, and the m+1 code words include $W_0^{16}, W_1^{16}, W_2^{16}, W_4^{16}$, and $W_8^{16}$.

Optionally, the processing module 1702 is specifically configured to:

generate the modulation symbol sequence by using a code word expression c, where
c = {ej(ψ1), ej(ψ2), ..., ej(ψ2^m)}, or c = {ej(ψ1), ej(ψ2), ..., ej(ψ2^m)}. *{preset symbol sequence};
ψ1, ψ2, ..., and ψ2^m represent the phases of the 2^m QPSK symbols; .* represents multiplication of corresponding positions; and the preset symbol sequence is a sequence including 2^m 1s and -1s.

Optionally, the processing module 1702 is specifically configured to:

perform spectrum spreading on the bit stream by using a preset spreading code, to obtain a spreading sequence; and
modulate the spreading sequence by using a preset modulation scheme to generate the modulation symbol sequence.

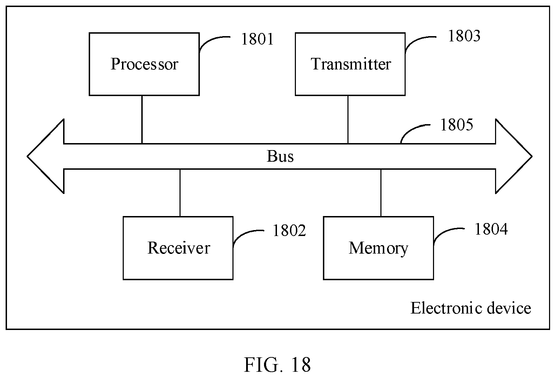

Optionally, the preset modulation scheme is one of the following: DPSK, QPSK, or 8PSK.
Optionally, the preset spreading code is one of the following: a Walsh code, a Golden code, or an M sequence.
Optionally, the second bit length is greater than or equal to 2 bits.
In another implementation, the determining module 1701 is configured to determine that a to-be-sent Bluetooth data packet is used to carry a physical-layer bandwidth update message LL_PHY_REQ, a physical-layer bandwidth update confirmation message LL_PHY_RSP, or a bandwidth update notification message LL_PHY_UPDATE_REQ, where the Bluetooth data packet includes an RI field; and
the processing module 1702 is configured to set a value of the RI field to a preset RI field value corresponding to a minimum MCS in a current transmission bandwidth.
Refer to FIG. 18, which shows a structure of an electronic device according to an embodiment of this application. The electronic device may be the mobile phone in embodiments of this application. The electronic device includes: a processor 1801, a receiver 1802, a transmitter 1803, a memory 1804, and a bus 1805. The processor 1801 includes one or more processing cores. The processor 1801 runs a software program and a module, to execute various functional applications and perform information processing. The receiver 1802 and the transmitter 1803 may be implemented as one communication component, and the communication component may be a baseband chip. The memory 1804 is connected to the processor 1801 through the bus 1805. The memory 1804 may be configured to store at least one program instruction, and the processor 1801 is configured to execute the at least one program instruction, to implement the technical solutions in the foregoing embodiments. Implementation principles and technical effects thereof are similar to those of the foregoing related method embodiments. Details are not described herein again.
After the electronic device is powered on, the processor may read the software program in the memory, interpret and execute the instructions of the software program, and process data of the software program. When the processor needs to send data via an antenna, after performing baseband processing on the to-be-sent data, the processor outputs a baseband signal to a control circuit in the control circuit. The control circuit performs radio frequency processing on the baseband signal, and then sends a radio frequency signal externally in a form of an electromagnetic wave via the antenna. When data is sent to the electronic device, the control circuit receives a radio frequency signal via the antenna, converts the radio frequency signal into a baseband signal, and outputs the baseband signal to the processor. The processor converts the baseband signal into data, and processes the data.

Persons skilled in the art can understand that, for ease of description, FIG. 18 shows only one memory and one processor. In an actual electronic device, there may be a plurality of processors and memories. The memory may also be referred to as a storage medium, a storage device, or the like. This is not limited in this embodiment of this application.

In an optional implementation, the processor may include a baseband processor and a central processing unit. The baseband processor is mainly configured to process communication data, and the central processing unit is mainly configured to execute the software program and process the data of the software program. Persons skilled in the art can understand that, the baseband processor and the central processing unit may be integrated into one processor, or may be independent processors, and are interconnected by using a technology such as a bus. Persons skilled in the art can understand that, the electronic device may include a plurality of baseband processors to adapt to different network standards; the electronic device may include a plurality of central processing units to enhance processing capabilities of the electronic device; and components of the electronic device may be connected through various buses. The baseband processor may also be represented as a baseband processing circuit or a baseband processing chip. The central processing unit may also be represented as a central processing circuit or a central processing chip. A function of processing a communication protocol and communication data may be built in the processor, or may be stored in a form of a software program in the memory, and the processor executes the software program to implement a baseband processing function. The memory may be integrated into the processor, or may be independent of the processor. The memory includes a cache Cache, and may store frequently accessed data/instructions.

In this embodiment of this application, the processor may be a general-purpose processor, a digital signal processor, an application-specific integrated circuit, a field programmable gate array or another programmable logic device, a discrete gate or transistor logic device, or a discrete hardware component; and may implement or perform the methods, steps, and logical block diagrams disclosed in embodiments of this application. The general-purpose processor may be a microprocessor, or may be any conventional processor or the like. The steps of the methods disclosed with reference to embodiments of this application may be directly performed by a hardware processor, or may be performed by a combination of hardware and software modules in the processor.

In this embodiment of this application, the memory may be a non-volatile memory, for example, a hard disk drive (hard disk drive, HDD) or a solid-state drive (solid-state drive, SSD), or may be a volatile memory (volatile memory), for example, a random access memory (random access memory, RAM). The memory is any other medium that can be used to carry or store expected program code in a form of instructions or a data structure and can be accessed by a computer, but is not limited thereto.

The memory in this embodiment of this application may be alternatively a circuit or any other apparatus that can implement a storage function, and is configured to store program instructions and/or data. All or a part of the methods provided in embodiments of this application may be implemented through software, hardware, firmware, or any combination thereof. When software is used for implementation, all or a part of the methods may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, a network device, user equipment, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device such as a server or a data center, integrating one or more usable media. The usable medium may be a magnetic medium (for example, a floppy disk, a hard disk drive, or a magnetic tape), an optical medium (for example, a digital video disc (digital video disc, DWD)), a semiconductor medium (for example, an SSD), or the like.

An embodiment of this application provides a computer program product. When the computer program product runs on a terminal, the terminal is enabled to perform the technical solutions in the foregoing embodiments. Implementation principles and technical effects thereof are similar to those of the foregoing related embodiments, and details are not described herein again.

An embodiment of this application provides a computer-readable storage medium, where the computer-readable storage medium stores program instructions. When the program instructions are executed by a terminal, the terminal is enabled to perform the technical solutions in the foregoing embodiments. Implementation principles and technical effects thereof are similar to those of the foregoing related embodiments, and details are not described herein again. In conclusion, the foregoing embodiments are merely intended for describing the technical solutions of this application rather than limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

**Claims**

1. A data modulation method, applied to a first electronic device, wherein the first electronic device performs Bluetooth communication with a second electronic device, and the method comprises:

   determining a bit stream corresponding to a value of a rate indicator RI field in a to-be-sent Bluetooth data packet, wherein the Bluetooth data packet further comprises a frame body, and the value of the RI field indicates a modulation scheme and a code rate MCS of the frame body; and
   modulating the bit stream to generate a modulation symbol sequence, wherein a first bit length corresponding to the modulation symbol sequence is greater than a second bit length of the RI field.

2. The method according to claim 1, wherein the modulating the bit stream to generate a modulation symbol sequence comprises:
   performing complementary code keying CCK modulation on the bit stream to generate the modulation symbol sequence, wherein the modulation symbol sequence comprises $2^m$ quadrature phase shift keying QPSK symbols, and m is a positive integer.

3. The method according to claim 2, wherein a ratio of $2^{(m+1)}$ to the second bit length is greater than or equal to 4.

4. The method according to claim 2, wherein the performing CCK modulation on the bit stream to generate the modulation symbol sequence comprises:

   obtaining, based on preset mapping relationships between the RI field and reference phases, m+1 reference phases corresponding to the bit stream;
   determining phases of the $2^m$ QPSK symbols based on the m+1 reference phases; and
   generating the modulation symbol sequence based on the phases of the $2^m$ QPSK symbols.

5. The method according to claim 4, wherein the second bit length is 4 bits, m is equal to 3, and the preset mapping relationships between the RI field and the reference phases are:

$$[\varphi 1, \varphi 2, \varphi 3, \varphi 4] = [b0 * \pi + b1 * (\pi/2), b2 * \pi + (\pi/2), 0, b3 * \pi]$$

   wherein $\varphi 1$, $\varphi 2$, $\varphi 3$, and $\varphi 4$ represent four reference phases; and b0, b1, b2, and b3 each represent a value of each bit in the RI field.

6. The method according to claim 4, wherein the second bit length is 4 bits, m is equal to 4, and the preset mapping relationships between the RI field and the reference phases are:

$$[\varphi 1, \varphi 2, \varphi 3, \varphi 4, \varphi 5] = [b0 * \pi, b1 * (\pi/2), b2 * \pi + (\pi/2), 0, b3 * \pi]$$

   wherein $\varphi 1$, $\varphi 2$, $\varphi 3$, $\varphi 4$, and $\varphi 5$ represent five reference phases; and b0, b1, b2, and b3 each represent a value of each bit in the RI field.

7. The method according to claim 4, wherein the determining phases of the $2^m$ QPSK symbols based on the m+1 reference phases comprises:

obtaining m+1 code words in a 2^mth-order Walsh code; and
determining, based on the m+1 reference phases and the m+1 code words, the phases of the 2^m QPSK symbols.

8. The method according to claim 7, wherein the determining, based on the m+1 reference phases and the m+1 code words, the phases of the 2^m QPSK symbols comprises:

using the m+1 code words as rows of a matrix respectively to form a target matrix; and
obtaining, based on the m+1 reference phases and each column vector of the target matrix, the phases of the 2^m QPSK symbols.

9. The method according to claim 7 or 8, wherein m is equal to 3, the 2^mth-order Walsh code comprises $\{W_0^8,\ W_1^8,\ W_2^8,\ W_3^8,\ W_4^8,\ W_5^8,\ W_6^8,\ W_7^8\}$ , and the m+1 code words comprise $W_0^8$ , $W_1^8$ , $W_2^8$ , and $W_4^8$ .

10. The method according to claim 7 or 8, wherein m is equal to 4, the 2^mth-order Walsh code comprises $\{W_0^{16},\ W_1^{16},\ W_2^{16},\ W_3^{16},\ W_4^{16},\ W_5^{16},\ W_6^{16},\ W_7^{16},\ W_8^{16},\ W_9^{16},\ W_{10}^{16},\ W_{11}^{16},\ W_{12}^{16},\ W_{13}^{16},\ W_{14}^{16},\ W_{15}^{16}\}$ , and the m+1 code words comprise $W_0^{16},\ W_1^{16},\ W_2^{16},\ W_4^{16}$ , and $W_8^{16}$ .

11. The method according to claim 4, wherein the generating the modulation symbol sequence based on the phases of the 2^m QPSK symbols comprises:

generating the modulation symbol sequence by using a code word expression c, wherein
c = {ej(ψ1), ej(ψ2), ..., ej(ψ2^m)}, or c = {ej(ψ1), ej(ψ2), ..., ej(ψ2^m)}.*{preset symbol sequence}; wherein
ψ1, ψ2, ..., and ψ2^m represent the phases of the 2^m QPSK symbols; .* represents multiplication of corresponding positions; and the preset symbol sequence is a sequence comprising 2^m 1s and -1s.

12. The method according to claim 1, wherein the modulating the bit stream to generate a modulation symbol sequence comprises:

performing spectrum spreading on the bit stream by using a preset spreading code, to obtain a spreading sequence; and
modulating the spreading sequence by using a preset modulation scheme to generate the modulation symbol sequence.

13. The method according to claim 12, wherein the preset modulation scheme is one of the following: differential phase shift keying DPSK, QPSK, or 8-phase shift keying 8PSK.

14. The method according to claim 12, wherein the preset spreading code is one of the following: a Walsh code, a Golden code, or an M sequence.

15. The method according to any one of claims 1 to 14, wherein the second bit length is greater than or equal to 2 bits.

16. A data processing method, applied to a first electronic device, wherein the first electronic device performs Bluetooth communication with a second electronic device, and the method comprises:

determining that a to-be-sent Bluetooth data packet is used to carry a physical-layer bandwidth update message LL_PHY_REQ, a physical-layer bandwidth update confirmation message LL_PHY_RSP, or a bandwidth update notification message LL_PHY_UPDATE_REQ, wherein the Bluetooth data packet comprises a rate indicator RI field; and
setting a value of the RI field to a preset RI field value corresponding to a minimum modulation scheme and a code rate MCS in a current transmission bandwidth.

17. An electronic device, wherein the electronic device comprises a processor, and the processor is configured to: be coupled to a memory, read instructions in the memory, and enable, based on the instructions, the electronic device to perform the method according to any one of claims 1 to 15, or perform the method according to claim 16.

18. A computer-readable storage medium, wherein the computer-readable storage medium stores computer instructions, and when the computer instructions are run on an electronic device, the electronic device is enabled to perform the method according to any one of claims 1 to 15, or perform the method according to claim 16.

19. A computer program product comprising instructions, wherein when the computer program product runs on a terminal, the terminal is enabled to perform the method according to any one of claims 1 to 15, or perform the method according to claim 16.

Mobile phone

Wireless headset

FIG. 1

LSB | | | | | | | | | | MSB

| Preamble | Access code | Trailer | Rate indicator | Guard | Synchronization | Header | Header error check | Payload | Cyclic redundancy check | Trailer |

FIG. 2

EP 4 336 736 A1

LSB | MSB

| Preamble | Access code | Trailer | Rate indicator | Header | Header error check | Payload | Cyclic redundancy check | Trailer |

FIG. 3

LSB ... MSB

| Preamble | Access code | Rate indicator / Header | Header error check | Payload 1 | Cyclic redundancy check 1 | Pilot | ... | Payload n | Cyclic redundancy check n | Trailer |

FIG. 4

EP 4 336 736 A1

LSB

MSB

| Preamble | Access code | Trailer | Rate indicator | Header | Payload | Cyclic redundancy check | Trailer |
|----------|-------------|---------|----------------|--------|---------|-------------------------|---------|

FIG. 5

Mobile phone

22

23  24  25

21

TO
FIG. 6B

<<Music title>>

FIG. 6A

Mobile phone

5G 5G 🛜 ✳ ▬ 8:00

Wireless headset

CONT.
FROM
FIG. 6A

Bluetooth
data packet

<<Music title>>

FIG. 6B

Mobile phone

⟹ ∼
TO
FIG. 7B

<<Music title>>                    21

                                    26

| Standard quality (3.9 MB) |
| High quality (9.8 MB) |
| Lossless quality (30.2 MB) |

FIG. 7A

Mobile phone

CONT.
FROM
FIG. 7A

Bluetooth
data packet

Wireless headset

5G 5G ☆ 🔋 8:00

<<Music title>>

27

Standard quality (3.9 MB)

High quality (9.8 MB)

Lossless quality (30.2 MB)

FIG. 7B

```
┌──────────┐                                    ┌──────────┐
│  Mobile  │                                    │ Wireless │
│  phone   │                                    │ headset  │
└────┬─────┘                                    └────┬─────┘
     │                                               │
     │        S801: Establish a                      │
     │        Bluetooth connection                   │
     │◄─────────────────────────────────────────────►│
     │                                               │
     │        S802: Data transmission                │
     │◄─────────────────────────────────────────────►│
     │                                               │
     │                                               │
```

FIG. 8

Mobile phone

TO
FIG. 9B

21

FIG. 9A

Mobile phone

CONT.
FROM
FIG. 9A

Bluetooth
data packet

Wireless headset

<<Music title>>

28

Standard quality (3.9 MB)

High quality (9.8 MB)

Lossless quality (30.2 MB)

FIG. 9B

```
┌─────────────────┐                                    ┌─────────────────┐
│  Mobile phone   │                                    │ Wireless headset│
└────────┬────────┘                                    └────────┬────────┘
         │                                                      │
         │  S1001: Bandwidth update request message             │
         ├─────────────────────────────────────────────────────▶
         │                                                      │
         │  S1002: Bandwidth update response message            │
         ◀─────────────────────────────────────────────────────┤
         │                                                      │
         │  S1003: Bandwidth update confirmation message        │
         ├─────────────────────────────────────────────────────▶
         │                                                      │
┌────────┴────────────┐                          ┌──────────────┴──────┐
│ S1005: Update a     │                          │ S1004: Update a     │
│ bandwidth           │                          │ bandwidth           │
│ configuration       │                          │ configuration       │
└────────┬────────────┘                          └──────────────┬──────┘
         │                                                      │
```

FIG. 10

```
┌──────────┐   ┌──────────┐   ┌──────────┐   ┌──────────┐
│ Mobile   │   │          │   │          │   │ Wireless │
│ phone    │   │ Mobile   │   │ Wireless │   │ headset  │
│(protocol-│   │ phone    │   │ headset  │   │(protocol-│
│stack upper│  │(link layer)│ │(link layer)│ │stack upper│
│ layer)   │   │          │   │          │   │ layer)   │
└────┬─────┘   └────┬─────┘   └────┬─────┘   └────┬─────┘
     │              │              │              │
     │ S1101: Bandwidth│           │              │
     │ update message  │           │              │
     ├──────────────▶  │           │              │
     │              │              │              │
     │ S1102: Bandwidth update  │  │              │
     │ confirmation message     S1103: Physical-layer │
     ◀──────────────┤   bandwidth update        │
     │              │   message     │              │
     │              ├──────────────▶│              │
     │              │              │              │
     │              │   S1104: Physical-layer      │
     │              │   bandwidth update           │
     │              │   confirmation message       │
     │              ◀──────────────┤              │
     │              │              │              │
     │              │   S1105: Bandwidth          │
     │              │   update notification       │
     │              │   message     │              │
     │              ├──────────────▶│              │
     │        ┌─────┴──────────────┴─────┐        │
     │        │ S1006: Update a bandwidth │        │
     │        │ configuration            │        │
     │        └─────┬──────────────┬─────┘        │
     │ S1107: Bandwidth update  │   S1108: Bandwidth update │
     │ complete message         │   complete message   │
     ◀──────────────┤           │   ├──────────────▶  │
     │              │              │              │
```

FIG. 11

Determine a bit stream corresponding to a value of an RI field in a to-be-sent Bluetooth data packet, where the Bluetooth data packet further includes a frame body, and the value of the RI field indicates a modulation scheme and a code rate of the frame body

S1201

Modulate the bit stream to generate a modulation symbol sequence

S1202

FIG. 12

Bit stream corresponding to an RI field → Spectrum spreading → Spreading sequence → Modulation → Modulation symbol sequence →

FIG. 13

Perform spectrum spreading on a bit stream by using a preset spreading code, to obtain a spreading sequence

S1401

Modulate the spreading sequence by using a preset modulation scheme to generate a modulation symbol sequence

S1402

FIG. 14

Bit stream corresponding to an RI field → CCK modulation → Modulation symbol sequence →

FIG. 15

FIG. 16

FIG. 17

FIG. 18

## INTERNATIONAL SEARCH REPORT

| | International application No. |
|---|---|
| | **PCT/CN2022/088976** |

| A. | CLASSIFICATION OF SUBJECT MATTER |
|---|---|

H04B 5/02(2006.01)i; H04L 1/00(2006.01)i

According to International Patent Classification (IPC) or to both national classification and IPC

| B. | FIELDS SEARCHED |
|---|---|

Minimum documentation searched (classification system followed by classification symbols)

H04L; H04B; H04W

Documentation searched other than minimum documentation to the extent that such documents are included in the fields searched

Electronic data base consulted during the international search (name of data base and, where practicable, search terms used)

CNTXT; CNKI; WPABS; ENTXT: 蓝牙, 速率指示, 调制, 编码, 方式, 机制, 方案, 模式, 长度, 带宽, 更新, 最小; bluetooth, rate, indication, indicator, modulation, coding, scheme, length, bandwidth, update, minimum

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 108616477 A (NANJING ZHONGGAN MICROELECTRONIC CO., LTD.) 02 October 2018 (2018-10-02) description, paragraphs [0048]-[0132] | 1-19 |
| A | CN 106878215 A (SHENZHEN ITEST TECHNOLOGY CO., LTD.) 20 June 2017 (2017-06-20) entire document | 1-19 |
| A | CN 111434060 A (QUALCOMM INC.) 17 July 2020 (2020-07-17) entire document | 1-19 |
| A | WO 2016057431 A1 (MEDIATEK INC. et al.) 14 April 2016 (2016-04-14) entire document | 1-19 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **20 May 2022** | **30 May 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.

**PCT/CN2022/088976**

| Patent document cited in search report | | | Publication date (day/month/year) | Patent family member(s) | | | Publication date (day/month/year) |
|---|---|---|---|---|---|---|---|
| CN | 108616477 | A | 02 October 2018 | WO | 2019154291 | A1 | 15 August 2019 |
|  |  |  |  | US | 2020252121 | A1 | 06 August 2020 |
| CN | 106878215 | A | 20 June 2017 | None | | | |
| CN | 111434060 | A | 17 July 2020 | EP | 3721569 | A1 | 14 October 2020 |
|  |  |  |  | SG | 11202003683 X | A | 29 June 2020 |
|  |  |  |  | US | 2019173606 | A1 | 06 June 2019 |
|  |  |  |  | WO | 2019112693 | A1 | 13 June 2019 |
|  |  |  |  | TW | 201926962 | A | 01 July 2019 |
| WO | 2016057431 | A1 | 14 April 2016 | EP | 3192183 | A1 | 19 July 2017 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110519334X